(19) Europäisches Patentamt / European Patent Office / Office européen des brevets

(11) **EP 3 566 423 B1**

## (12) EUROPEAN PATENT SPECIFICATION

(45) Date of publication and mention
of the grant of the patent:
**28.10.2020 Bulletin 2020/44**

(21) Application number: **18700318.1**

(22) Date of filing: **05.01.2018**

(51) Int Cl.:
***H04L 29/08*** *(2006.01)*

(86) International application number:
**PCT/EP2018/050287**

(87) International publication number:
**WO 2018/127568 (12.07.2018 Gazette 2018/28)**

(54) **VERIFICATION OF FIXED-POINT ARITHMETIC**

VERIFIZIERUNG EINER FESTPUNKTARITHMETIK

VÉRIFICATION D'ARITHMÉTIQUE EN VIRGULE FIXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2017 US 201762443080 P
25.04.2017 US 201762489688 P**

(43) Date of publication of application:
**13.11.2019 Bulletin 2019/46**

(73) Proprietor: **Koninklijke Philips N.V.
5656 AG Eindhoven (NL)**

(72) Inventor: **VEENINGEN, Meilof, Geert
5656 AE Eindhoven (NL)**

(74) Representative: **Beck, Christopher Andrew
Philips International B.V.
Intellectual Property & Standards
High Tech Campus 5
5656 AE Eindhoven (NL)**

(56) References cited:
**WO-A1-2012/011902**

- **OCTAVIAN CATRINA ET AL: "Secure
Computation with Fixed-Point Numbers", 25
January 2010 (2010-01-25), FINANCIAL
CRYPTOGRAPHY AND DATA SECURITY,
SPRINGER BERLIN HEIDELBERG, BERLIN,
HEIDELBERG, PAGE(S) 35 - 50, XP019147523,
ISBN: 978-3-642-14576-6 Ch. 2, 3**
- **MICHAEL WALFISH ET AL: "Verifying
computations without reexecuting them",
COMMUNICATIONS OF THE ACM, ASSOCIATION
FOR COMPUTING MACHINERY, INC, UNITED
STATES, vol. 58, no. 2, 28 January 2015
(2015-01-28), pages 74-84, XP058064922, ISSN:
0001-0782, DOI: 10.1145/2641562**

**Description**

**CROSS REFERENCE TO RELATED APPLICATIONS**

The present application is related to U.S. Provisional Application No. 62/443,080 filed January 6, 2017, and U.S. Provisional Application No. 62/489,688 filed April 25, 2017.

**TECHNICAL FIELD**

Embodiments described herein relate to fixed-point arithmetic, and to the verification of results.

**BACKGROUND**

In many applications, it is necessary to perform computations on fixed-point numbers. For the purposes of this disclosure, a fixed-point value is an integer value that represents a particular natural number, and the fixed-point value has an associated scaling factor.
Thus, for example, the natural number 1.234 can be represented by the fixed-point value 1234 with a scaling factor $10^{-3}$. In many cases of practical interest, arithmetic operations are carried out in digital processors, which operate using binary arithmetic, and therefore the scaling factor that is used may be a power of 2. For example, the natural binary number 10.101 can be represented by the fixed-point value 10101 with a scaling factor $2^{-3}$.
There are situations in which it is necessary to verify that an arithmetic calculation has been performed correctly.
For example, when a client outsources a computation to a third party, it is advantageous for the client to be able to verify that the computation has been performed correctly, and it is preferable for this verification to be performed in a way that does not require the client to perform the entire computation.
Similarly, when one or more party inputs sensitive data to a privacy-preserving computation, it is required that the computation should be verifiable, even if the sensitive data is not available to the verifier.
One issue that arises when performing arithmetic operations on fixed-point values is that the result of performing a multiplication or division on two fixed-point values that each have a given scaling factor cannot be expressed exactly as a third fixed-point value with the same scaling factor. For example, fixed-point values with a scaling factor of $10^{-3}$ may accurately represent natural numbers that have up to three digits after the decimal point. If two such numbers are multiplied together, the result will be a natural number that may have up to six digits after the decimal point. This cannot be represented perfectly by a fixed-point value with a scaling factor of $10^{-3}$ and so the fixed-point value that is provided as the output of the operation must be generated by truncating the result of the multiplication to reduce the number of digits after the decimal point.
"Secure Computation with Fixed-Point Numbers", Catrina et al., discloses a method for secure fixed-point multiparty computation.

**SUMMARY**

A brief summary of various embodiments is presented below.
Various embodiments relate to a method of verifying a calculation, the method comprising:

receiving a plurality of multiplicand fixed-point values representing respective natural numbers, wherein the multiplicand fixed-point values have respective multiplicand scaling factors;
receiving a product fixed-point value representing a respective natural number, wherein the product fixed-point value has a product scaling factor; and
determining whether the product fixed-point value is a correctly truncated result of multiplying the multiplicand fixed-point values together by:
determining whether the difference between (a) the product of the product fixed-point value and the inverse of a combined scaling factor and (b) the product of the multiplicand fixed-point values is within a range bounded by the negation of the inverse of the combined scaling factor and the inverse of the combined scaling factor, wherein the combined scaling factor is equal to the product of the multiplicand scaling factors divided by the product scaling factor.

The step of determining whether the difference between (a) the product of the product fixed-point value and the inverse of the combined scaling factor and (b) the product of the multiplicand fixed-point values is within a range bounded by the negation of the inverse of the combined scaling factor and the inverse of the combined scaling factor may comprise:

determining whether the sum of (c) the inverse of the combined scaling factor and (d) the difference between (a) the product of the product fixed-point value and the inverse of the combined scaling factor and (b) the product of the multiplicand fixed-point values is greater than or equal to zero; and

determining whether the difference between (c) the inverse of the combined scaling factor and (d) the difference between (a) the product of the product fixed-point value and the inverse of the combined scaling factor and (b) the product of the multiplicand fixed-point values is greater than or equal to zero.

The step of determining whether the sum of (c) the inverse of the combined scaling factor and (d) the difference between (a) the product of the product fixed-point value and the inverse of the combined scaling factor and (b) the product of the multiplicand fixed-point values is greater than or equal to zero may comprise:

forming the sum of (c) the inverse of the combined scaling factor and (d) the difference between (a) the product of the product fixed-point value and the inverse of the combined scaling factor and (b) the product of the multiplicand fixed-point values;

computing a bit decomposition thereof; and

determining whether each bit of the bit decomposition is a binary value.

The step of determining whether the difference between (c) the inverse of the combined scaling factor and (d) the difference between (a) the product of the product fixed-point value and the inverse of the combined scaling factor and (b) the product of the multiplicand fixed-point values is greater than or equal to zero may comprise:

forming the difference between (c) the inverse of the combined scaling factor and (d) the difference between (a) the product of the product fixed-point value and the inverse of the combined scaling factor and (b) the product of the multiplicand fixed-point values;

computing a bit decomposition thereof; and

determining whether each bit of the bit decomposition is a binary value.

The method may comprise providing to a verifier commitments of said plurality of multiplicand fixed-point values and cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor.

The method may comprise obtaining said commitments of said plurality of multiplicand fixed-point values and said cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor using multi-party computation.

The method may comprise performing said method using multi-party computation.

The method may comprise using the product fixed-point value in a further function only if it is determined that it is a correctly truncated result of multiplying the multiplicand fixed-point values together.

Various embodiments relate to a non-transitory machine-readable medium encoded with instructions for performing a method of verifying a calculation, the instructions comprising:

instructions for receiving a plurality of multiplicand fixed-point values representing respective natural numbers, wherein the multiplicand fixed-point values have respective multiplicand scaling factors;

instructions for receiving a product fixed-point value representing a respective natural number, wherein the product fixed-point value has a product scaling factor; and

instructions for determining whether the product fixed-point value is a correctly truncated result of multiplying the multiplicand fixed-point values together by:

determining whether the difference between (a) the product of the product fixed-point value and the inverse of a combined scaling factor and (b) the product of the multiplicand fixed-point values is within a range bounded by the negation of an inverse of the combined scaling factor and the inverse of the combined scaling factor, wherein the combined scaling factor is equal to the product of the multiplicand scaling factors divided by the product scaling factor.

Other embodiments relate to a non-transitory machine-readable medium encoded with instructions for performing any of the method embodiments.

Various embodiments relate to a device for verifying a calculation, the device comprising:

a memory; and

a processor in communication with the memory, the processor being configured to:

receive a plurality of multiplicand fixed-point values representing respective natural numbers, wherein the multiplicand fixed-point values have respective multiplicand scaling factors;

receive a product fixed-point value representing a respective natural number, wherein the product fixed-point value has a product scaling factor; and

determine whether the product fixed-point value is a correctly truncated result of multiplying the multiplicand fixed-point values together by:

determining whether the difference between (a) the product of the product fixed-point value and the inverse of a combined scaling factor and (b) the product of the multiplicand fixed-point values is within a range bounded by the negation of an inverse of the combined scaling factor and the inverse of the combined scaling factor, wherein the combined scaling factor is equal to the product of the multiplicand scaling factors divided by the product scaling factor.

The processor may be configured to determine whether the difference between (a) the product of the product fixed-point value and the inverse of the combined scaling factor and (b) the product of the multiplicand fixed-point values is within a range bounded by the negation of the inverse of the combined scaling factor and the inverse of the combined scaling factor by:

determining whether the sum of (c) the inverse of the combined scaling factor and (d) the difference between (a) the product of the product fixed-point value and the inverse of the combined scaling factor and (b) the product of the multiplicand fixed-point values is greater than or equal to zero; and

determining whether the difference between (c) the inverse of the combined scaling factor and (d) the difference between (a) the product of the product fixed-point value and the inverse of the combined scaling factor and (b) the product of the multiplicand fixed-point values is greater than or equal to zero.

The processor may be configured to determine whether the sum of (c) the inverse of the combined scaling factor and (d) the difference between (a) the product of the product fixed-point value and the inverse of the combined scaling factor and (b) the product of the multiplicand fixed-point values is greater than or equal to zero by:

forming the sum of (c) the inverse of the combined scaling factor and (d) the difference between (a) the product of the product fixed-point value and the inverse of the combined scaling factor and (b) the product of the multiplicand fixed-point values;

computing a bit decomposition thereof; and

determining whether each bit of the bit decomposition is a binary value.

The processor may be configured to determine whether the difference between (c) the inverse of the combined scaling factor and (d) the difference between (a) the product of the product fixed-point value and the inverse of the combined scaling factor and (b) the product of the multiplicand fixed-point values is greater than or equal to zero by:

forming the difference between (c) the inverse of the combined scaling factor and (d) the difference between (a) the product of the product fixed-point value and the inverse of the combined scaling factor and (b) the product of the multiplicand fixed-point values;

computing a bit decomposition thereof; and

determining whether each bit of the bit decomposition is a binary value.

The processor may be configured to provide to a verifier commitments of said plurality of multiplicand fixed-point values and cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor.

The processor may be configured to take part in a multi-party computation for obtaining said commitments of said plurality of multiplicand fixed-point values and said cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor.

The processor may be configured to take part in a multi-party computation for receiving the plurality of multiplicand fixed-point values representing respective natural numbers; receiving the product fixed-point value representing a respective natural number; and determining whether the product fixed-point value is a correctly truncated result of multiplying the multiplicand fixed-point values together.

Various embodiments relate to a method of verifying a calculation, wherein a prover has performed a method comprising:

> receiving a plurality of multiplicand fixed-point values representing respective natural numbers, wherein the multiplicand fixed-point values have respective multiplicand scaling factors;
> receiving a product fixed-point value representing a respective natural number, wherein the product fixed-point value has a product scaling factor; and
> determining whether the product fixed-point value is a correctly truncated result of multiplying the multiplicand fixed-point values together by:

>> determining whether the difference between (a) the product of the product fixed-point value and the inverse of a combined scaling factor and (b) the product of the multiplicand fixed-point values is within a range bounded by the negation of the inverse of the combined scaling factor and the inverse of the combined scaling factor, wherein the combined scaling factor is equal to the product of the multiplicand scaling factors divided by the product scaling factor,
>> the method comprising:

>>> receiving from the prover commitments of said plurality of multiplicand fixed-point values;
>>> receiving from the prover cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor; and
>>> verifying the cryptographic proof with respect to the respective commitments.

Other embodiments relate to a device comprising a memory and a processor in communication with the memory, with the processor being configured to perform said method; and to a non-transitory machine-readable medium encoded with instructions for performing said method.

Various embodiments relate to a method of verifying a calculation, the method comprising:

> receiving a first fixed-point value representing a first natural number, wherein the first fixed-point value has a first scaling factor;
> receiving a second fixed-point value representing a second natural number, wherein the second fixed-point value has a second scaling factor;
> receiving a third fixed-point value representing a third natural number, wherein the third fixed-point value has a third scaling factor; and
> determining whether the third fixed-point value is a correctly truncated result of dividing the first fixed-point value by the second fixed-point value by:
> determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor.

The step of determining whether the difference between (e) the product of the first fixed-point value and the inverse of the combined scaling factor and (f) the product of the second fixed-point value and the third fixed-point value is within a range bounded by the negation of the second fixed-point value and the second fixed-point value may comprise:

> determining whether the sum of the second fixed-point value and the difference between (e) the product of the first fixed-point value and the inverse of the combined scaling factor and (f) the product of the second fixed-point value and the third fixed-point value is greater than or equal to zero; and
> determining whether the sum of the second fixed-point value and the difference between (f) the product of the second fixed-point value and the third fixed-point value and (e) the product of the first fixed-point value and the inverse of the combined scaling factor is greater than or equal to zero.

The step of determining whether the sum of the second fixed-point value and the difference between (e) the product of the first fixed-point value and the inverse of the combined scaling factor and (f) the product of the second fixed-point value and the third fixed-point value is greater than or equal to zero may comprise:

forming the sum of the second fixed-point value and the difference between (e) the product of the first fixed-point value and the inverse of the combined scaling factor and (f) the product of the second fixed-point value and the third fixed-point value;

computing a bit decomposition thereof; and

determining whether each bit of the bit decomposition is a binary value.

The step of determining whether the sum of the second fixed-point value and the difference between (f) the product of the second fixed-point value and the third fixed-point value and (e) the product of the first fixed-point value and the inverse of the combined scaling factor is greater than or equal to zero may comprise:

forming the sum of the second fixed-point value and the difference between (f) the product of the second fixed-point value and the third fixed-point value and (e) the product of the first fixed-point value and the inverse of the combined scaling factor;

computing a bit decomposition thereof; and

determining whether each bit of the bit decomposition is a binary value.

The method may comprise providing to a verifier commitments of said plurality of first, second and third fixed-point values and cryptographic proof that the difference between (e) the product of the first fixed-point value and the inverse of a combined scaling factor and (f) the product of the second fixed-point value and the third fixed-point value is within the range bounded by the negation of the second fixed-point value and the second fixed-point value.

The method may comprise obtaining said commitments of said plurality of first, second and third fixed-point values and said cryptographic proof that the difference between (e) the product of the first fixed-point value and the inverse of a combined scaling factor and (f) the product of the second fixed-point value and the third fixed-point value is within the range bounded by the negation of the second fixed-point value and the second fixed-point value, using multi-party computation.

The method may comprise performing said method using multi-party computation.

The method may comprise using the third fixed-point value in a further function only if it is determined that it is a correctly truncated result of dividing the first fixed-point value by the second fixed-point value.

Various embodiments relate to a non-transitory machine-readable medium encoded with instructions for performing a method of verifying a calculation, the instructions comprising:

instructions for receiving a first fixed-point value representing a first natural number, wherein the first fixed-point value has a first scaling factor;

instructions for receiving a second fixed-point value representing a second natural number, wherein the second fixed-point value has a second scaling factor;

instructions for receiving a third fixed-point value representing a third natural number, wherein the third fixed-point value has a third scaling factor; and

instructions for determining whether the third fixed-point value is a correctly truncated result of dividing the first fixed-point value by the second fixed-point value by:

determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor.

Other embodiments relate to a non-transitory machine-readable medium encoded with instructions for performing any of the method embodiments.

Various embodiments relate to a device for verifying a calculation, the device comprising:

a memory; and

a processor in communication with the memory, the processor being configured to:

receive a first fixed-point value representing a first natural number, wherein the first fixed-point value has a first scaling factor;

receive a second fixed-point value representing a second natural number, wherein the second fixed-point value has a second scaling factor;

receive a third fixed-point value representing a third natural number, wherein the third fixed-point value has a third scaling factor; and

determine whether the third fixed-point value is a correctly truncated result of dividing the first fixed-point value by the second fixed-point value by:

determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor.

The processor may be configured to determine whether the difference between (e) the product of the first fixed-point value and the inverse of the combined scaling factor and (f) the product of the second fixed-point value and the third fixed-point value is within a range bounded by the negation of the second fixed-point value and the second fixed-point value by:

determining whether the sum of the second fixed-point value and the difference between (e) the product of the first fixed-point value and the inverse of the combined scaling factor and (f) the product of the second fixed-point value and the third fixed-point value is greater than or equal to zero; and
determining whether the sum of the second fixed-point value and the difference between (f) the product of the second fixed-point value and the third fixed-point value and (e) the product of the first fixed-point value and the inverse of the combined scaling factor is greater than or equal to zero.

The processor may be configured to determine whether the sum of the second fixed-point value and the difference between (e) the product of the first fixed-point value and the inverse of the combined scaling factor and (f) the product of the second fixed-point value and the third fixed-point value is greater than or equal to zero by:

forming the sum of the second fixed-point value and the difference between (e) the product of the first fixed-point value and the inverse of the combined scaling factor and (f) the product of the second fixed-point value and the third fixed-point value;
computing a bit decomposition thereof; and
determining whether each bit of the bit decomposition is a binary value.

The processor may be configured to determine whether the sum of the second fixed-point value and the difference between (f) the product of the second fixed-point value and the third fixed-point value and (e) the product of the first fixed-point value and the inverse of the combined scaling factor is greater than or equal to zero by:

forming the sum of the second fixed-point value and the difference between (f) the product of the second fixed-point value and the third fixed-point value and (e) the product of the first fixed-point value and the inverse of the combined scaling factor;
computing a bit decomposition thereof; and
determining whether each bit of the bit decomposition is a binary value.

The processor may be configured to provide to a verifier commitments of said first, second, and third fixed-point values and cryptographic proof that the difference between (e) the product of the first fixed-point value and the inverse of a combined scaling factor and (f) the product of the second fixed-point value and the third fixed-point value is within a range bounded by the negation of the second fixed-point value and the second fixed-point value.

The processor may be configured to take part in a multi-party computation for obtaining said commitments of said first, second, and third multiplicand fixed-point values and said cryptographic proof that the difference between (e) the product of the first fixed-point value and the inverse of a combined scaling factor and (f) the product of the second fixed-point value and the third fixed-point value is within a range bounded by the negation of the second fixed-point value and the second fixed-point value.

The processor may be configured to take part in a multi-party computation for receiving the first, second, and third fixed-point values representing respective natural numbers; and determining whether the third fixed-point value is a correctly truncated result of dividing the first fixed-point value by the second fixed-point value.

Various embodiments relate to a method of verifying a calculation, wherein a prover has performed a method comprising:

receiving a first fixed-point value representing a first natural number, wherein the first fixed-point value has a first scaling factor;
receiving a second fixed-point value representing a second natural number, wherein the second fixed-point value has a second scaling factor;

receiving a third fixed-point value representing a third natural number, wherein the third fixed-point value has a third scaling factor; and

determining whether the third fixed-point value is a correctly truncated result of dividing the first fixed-point value by the second fixed-point value by:

determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor,

the method comprising:

receiving from the prover commitments of said first, second, and third multiplicand fixed-point values;
receiving from the prover cryptographic proof that the difference between (e) the product of the first fixed-point value and the inverse of a combined scaling factor and (f) the product of the second fixed-point value and the third fixed-point value is within the range bounded by the negation of the second fixed-point value and the second fixed-point value; and
verifying the cryptographic proof with respect to the respective commitments. Other embodiments relate to a device comprising a memory and a processor in communication with the memory, with the processor being configured to perform said method; and to a non-transitory machine-readable medium encoded with instructions for performing said method.

The invention is defined by the appended claims.

## BRIEF DESCRIPTION OF THE DRAWINGS

For a better understanding of the embodiments, reference is made to the accompanying drawings, in which:

Figure 1 illustrates an example of a hardware system for implementing the verification schemes described herein.

Figure 2 is a first flow chart illustrating a method.

Figure 3 is a second flow chart illustrating a method.

Figure 4 is a third flow chart illustrating a method.

Figure 5 is a fourth flow chart illustrating a method.

Figure 6 is a fifth flow chart illustrating a method.

Figure 7 is a sixth flow chart illustrating a method.

Figure 8 is a seventh flow chart illustrating a method.

Figure 9 is an eighth flow chart illustrating a method.

## DETAILED DESCRIPTION

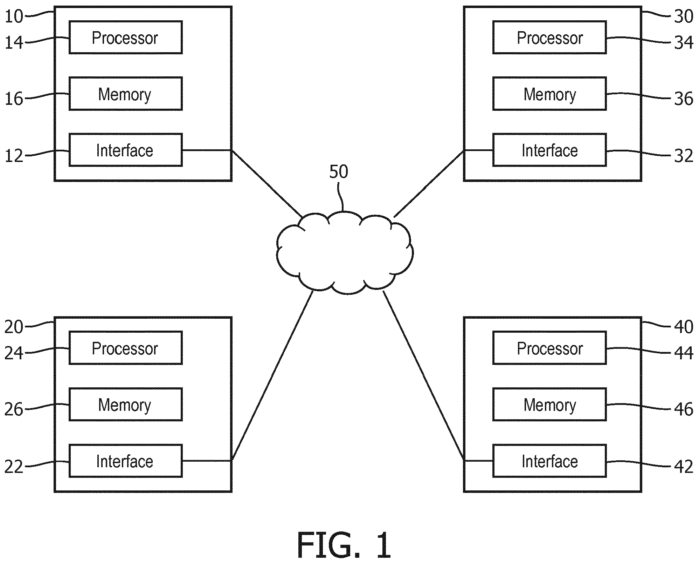

Figure 1 illustrates a hardware system that can be used in performing computations.
As discussed in more detail below, the verification schemes described herein are particularly suited to use in circumstances in which multiple parties are involved in the computation.
For example, a first party may possess certain data, and may outsource the computation of a function of that data to a second party. In another example, the first party may outsource the computation of the function to multiple second parties. In such examples, the first party may need to verify that the computation was performed correctly by the second party or second parties. Additionally, or alternatively, the second party or second parties may need to provide the first party with proof that the function was computed correctly.
In other examples, the input data may be in the possession of multiple first parties, and the computation may be performed by one or more second parties. Again, in such examples, the first parties may need to verify that the computation was performed correctly by the second party or second parties, and the second party or second parties may need to provide the first parties with proof that the function was computed correctly.

In various examples, as discussed in more detail below, the data may be sensitive. For example, the data may be commercially confidential or may be privacy-related. In such cases, the data that is transferred from one party to another may be encrypted in some way. In the examples below, the term data is used to refer equally to the data of interest in a calculation and to encrypted versions of data that are used to protect confidentiality and/or privacy.

Figure 1 therefore illustrates a system in which there are multiple hardware devices 10, 20, 30, 40, which may be under the control of respective different parties.

The first hardware device 10 includes an interface 12 for connection to other devices. The first hardware device 10 further includes a processor 14 for performing operations on data. The first hardware device 10 further includes a memory 16 for storing data and for storing program instructions for causing the processor 14 to perform method steps as described in more detail below.

The processor 14 may be any hardware device capable of executing instructions stored in the memory 16. As such, the processor may include a microprocessor, field programmable gate array (FPGA), application-specific integrated circuit (ASIC), or other similar devices.

The memory 16 may include various memories such as cache or system memory. As such, the memory 16 may include static random access memory (SRAM), dynamic RAM (DRAM), flash memory, read only memory (ROM), or other similar memory devices.

The second hardware device 20 includes an interface 22 for connection to other devices. The second hardware device 20 further includes a processor 24 for performing operations on data. The second hardware device 20 further includes a memory 26 for storing data and for storing program instructions for causing the processor 24 to perform method steps as described in more detail below.

The processor 24 may be any hardware device capable of executing instructions stored in the memory 26. As such, the processor may include a microprocessor, field programmable gate array (FPGA), application-specific integrated circuit (ASIC), or other similar devices.

The memory 26 may include various memories such as cache or system memory. As such, the memory 26 may include static random access memory (SRAM), dynamic RAM (DRAM), flash memory, read only memory (ROM), or other similar memory devices.

The third hardware device 30 includes an interface 32 for connection to other devices. The third hardware device 30 further includes a processor 34 for performing operations on data. The third hardware device 30 further includes a memory 36 for storing data and for storing program instructions for causing the processor 34 to perform method steps as described in more detail below.

The processor 34 may be any hardware device capable of executing instructions stored in the memory 36. As such, the processor may include a microprocessor, field programmable gate array (FPGA), application-specific integrated circuit (ASIC), or other similar devices.

The memory 36 may include various memories such as cache or system memory. As such, the memory 36 may include static random access memory (SRAM), dynamic RAM (DRAM), flash memory, read only memory (ROM), or other similar memory devices.

The fourth hardware device 40 includes an interface 42 for connection to other devices. The fourth hardware device 40 further includes a processor 44 for performing operations on data. The fourth hardware device 40 further includes a memory 46 for storing data and for storing program instructions for causing the processor 44 to perform method steps as described in more detail below.

The processor 44 may be any hardware device capable of executing instructions stored in the memory 46. As such, the processor may include a microprocessor, field programmable gate array (FPGA), application-specific integrated circuit (ASIC), or other similar devices.

The memory 46 may include various memories such as cache or system memory. As such, the memory 46 may include static random access memory (SRAM), dynamic RAM (DRAM), flash memory, read only memory (ROM), or other similar memory devices.

The system may include any desired number of hardware devices similar to the hardware devices 10, 20, 30, 40.

As shown in Figure 1, the hardware devices 10, 20, 30, 40 are connected by a communications network 50. The communications network 50 may take any suitable form for transferring data between the hardware devices 10, 20, 30, 40. For example, the communications network 50 may be a local area network (LAN) or wide area network (WAN), and may operate using with wired or wireless connections or a mixture of wired and wireless connections, and may operate with any suitable communications protocol or mix of communications protocols.

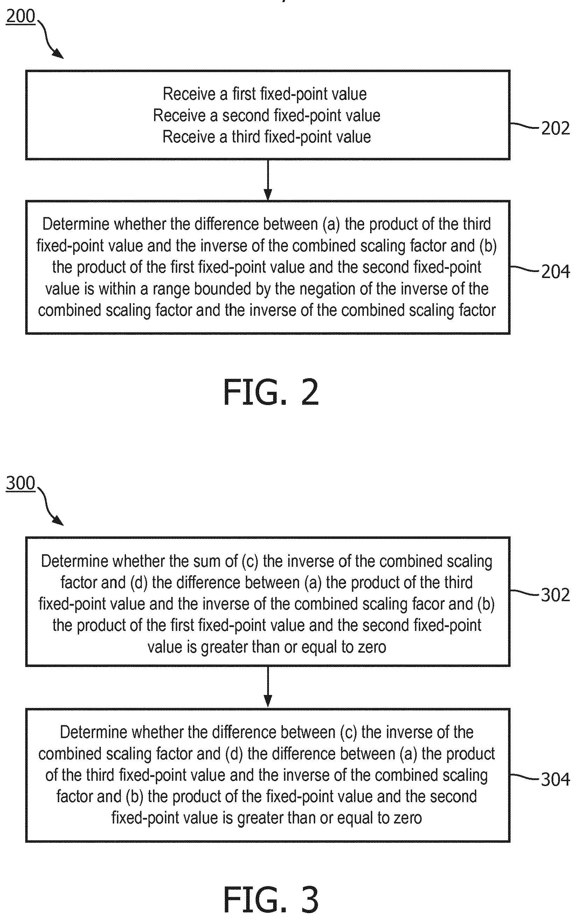

Figure 2 illustrates an example of a method 200 for verifying a calculation. The method 200 is applicable in the case in which the calculation is a multiplication of two or more fixed-point values. However, the following description relates to an illustrative example in which the calculation is a multiplication of two fixed-point values.

Thus, in step 202, the method involves receiving a first fixed-point value $c$. The first fixed-point value $c$ represents a first natural number $\tilde{c}$, and the first fixed-point value has a first scaling factor $2^{-k1}$, such that $\tilde{c} = c.2^{-k1}$. Step 202 also involves receiving a second fixed-point value $d$. The second fixed-point value $d$ represents a second natural number $\tilde{d}$, and the second fixed-point value has a second scaling factor $2^{-k2}$, such that $\tilde{d} = d.2^{-k2}$.

Step 202 also involves receiving a third fixed-point value e. The third fixed-point value $e$ represents a third natural number $\tilde{e}$, and the third fixed-point value has a third scaling factor $2^{-k3}$, such that $\tilde{e} = e.2^{-k3}$.

It is required to verify that the third fixed-point value e is the correct result of multiplying the first fixed-point value c and the second fixed-point value $d$.

One issue that arises when performing arithmetic operations on fixed-point values is that the result of performing a multiplication on two fixed-point values that each have a given scaling factor cannot necessarily be expressed exactly as a third fixed-point value with the same scaling factor. That is, fixed-point values with a scaling factor of $2^{-k}$ may accurately represent natural numbers that have up to $k$ binary digits after the radix point (i.e. the equivalent of the decimal point in binary numbers). If two such numbers are multiplied together, the result will be a natural number that may have up to $2k$ digits after the radix point. This cannot be represented perfectly by a fixed-point value with a scaling factor of $2^{-k}$, and so the fixed-point value that is provided as the output of the operation must be generated by truncating the result of the multiplication to reduce the number of digits after the radix point.

Step 204 of the process shown in Figure 2 therefore involves determining whether the third fixed-point value is a correctly truncated result of multiplying the first fixed-point value by the second fixed-point value.

In the example described above, if the third fixed-point value is a correctly truncated result of multiplying the first fixed-point value by the second fixed-point value, then it can be said that $\tilde{e} \approx \tilde{c} \cdot \tilde{d}$. From the definitions given above, it therefore follows that $e \cdot 2^{-k3} \approx c \cdot 2^{-k1} \cdot d \cdot 2^{-k2}$, and therefore that $2^{(k1+k2-k3)}. e \approx c \cdot d$. The product of the first scaling factor $2^{-k1}$ and the second scaling factor $2^{-k2}$, divided by the third scaling factor $2^{-k3}$, can then be considered to be a combined scaling factor $2^{-(k1+k2-k3)}$.

It is recognised here that, if the third fixed-point value is a correctly truncated result of multiplying the first fixed-point value by the second fixed-point value, the difference between, on the one hand, the product of the third fixed-point value and the inverse of the combined scaling factor and, on the other hand, the product of the first fixed-point value and the second fixed-point value will lie within a known range. More specifically, this range is bounded by the negation of the inverse of the combined scaling factor and the inverse of the combined scaling factor.

When reference is made herein to the "difference between" two numbers $x$ and $y$, presented in that order, this refers to the absolute value of $(x - y)$.

That is, if the third fixed-point value $e$ is the correct result of multiplying the first fixed-point value $c$ and the second fixed-point value $d$, then:

$$2^{(k1+k2-k3)}.e - c.d \in \left[-2^{(k1+k2-k3)}, 2^{(k1+k2-k3)}\right].$$

As mentioned above, this method can be used for testing the correctness of the multiplication of more than two multiplicand fixed point values, with respective multiplicand scaling factors, given a product fixed point value having a product scaling factor. It can readily be deduced as above that, if the product fixed-point value is a correctly truncated result of multiplying the multiplicand fixed-point values, then the difference between, on the one hand, the product of the product fixed-point value and the inverse of a combined scaling factor and, on the other hand, the product of the multiplicand fixed-point values will lie within a known range. More specifically, this range is bounded by the negation of the inverse of the combined scaling factor and the inverse of the combined scaling factor, where the combined scaling factor is now the product of the multiplicand scaling factors, divided by the product scaling factor.

However, for ease of explanation, the illustrated example will now consider one specific case, in which it is required to verify that the third fixed-point value $e$ is the correct result of multiplying the first fixed-point value $c$ and the second fixed-point value $d$, and moreover the first scaling factor $2^{-k1}$, the second scaling factor $2^{-k2}$, and the third scaling factor $2^{-k3}$, are all equal to $2^{-k}$, and so the combined scaling factor $2^{-(k1+k2-k3)}$ is also $2^{-k}$.

Figure 3 illustrates an example of a method 300 for determining whether the difference between (a) the product of the third fixed-point value and the inverse of the combined scaling factor and (b) the product of the first fixed-point value and the second fixed-point value is within a range bounded by the negation of the inverse of the combined scaling factor and the inverse of the scaling factor, that is, for verifying that the relationship $2^{k}.e - c.d \in [-2^{k}, 2^{k}]$ is satisfied.

Thus, the method 300 recognises that, for the relationship $2^{k}.e - c.d \in [-2^{k}, 2^{k}]$ to be satisfied, it is necessary for two further relationships to be satisfied, namely:

$$2^{k} + (2^{k}.e - c.d) \geq 0,$$

and

$$2^k - (2^k.e - c.d) \geq 0\,.$$

Thus, step 302 tests the first of these further relationships, and determines whether the sum of, on the one hand, the inverse of the combined scaling factor and, on the other hand, the difference between, firstly, the product of the third fixed-point value and the inverse of the combined scaling factor and, secondly, the product of the first fixed-point value and the second fixed-point value, is greater than or equal to zero.

Similarly, step 304 tests the second of these further relationships, and determines whether the difference between, on the one hand, the inverse of the combined scaling factor and, on the other hand, the difference between, firstly, the product of the third fixed-point value and the inverse of the combined scaling factor and, secondly, the product of the first fixed-point value and the second fixed-point value, is greater than or equal to zero.

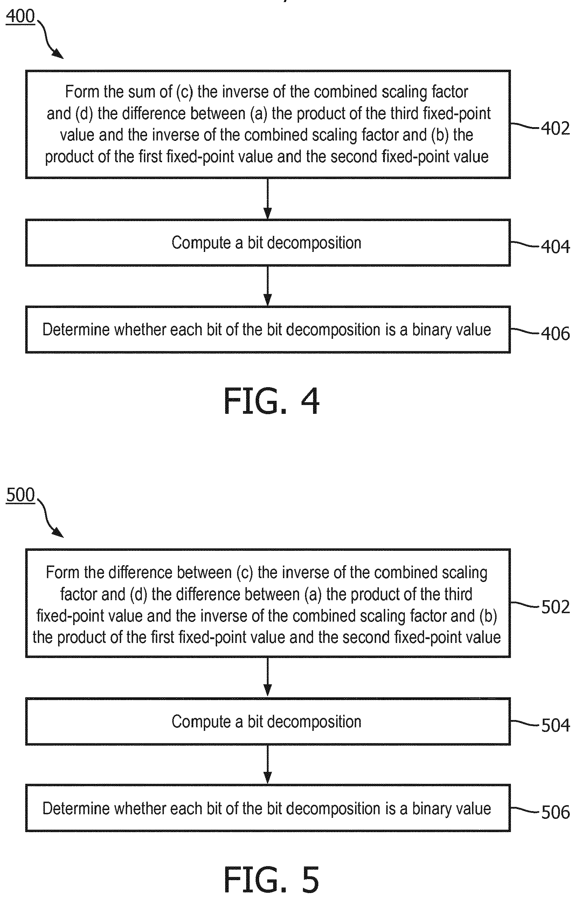

Figure 4 illustrates an example of a method 400 for determining whether the sum of, on the one hand, the inverse of the combined scaling factor and, on the other hand, the difference between, firstly, the product of the third fixed-point value and the inverse of the combined scaling factor and, secondly, the product of the first fixed-point value and the second fixed-point value, is greater than or equal to zero.

In step 402, the sum of, on the one hand, the inverse of the combined scaling factor and, on the other hand, the difference between, firstly, the product of the third fixed-point value and the inverse of the combined scaling factor and, secondly, the product of the first fixed-point value and the second fixed-point value is formed.

In order to determine whether this sum is greater than or equal to zero, step 404 comprises computing a bit decomposition of the sum, and step 406 comprises determining whether each bit of the bit decomposition is a binary value.

It is known that the sum of, on the one hand, the inverse of the combined scaling factor and, on the other hand, the difference between, firstly, the product of the third fixed-point value and the inverse of the combined scaling factor and, secondly, the product of the first fixed-point value and the second fixed-point value will have a maximum length that depends on the combined scaling factor. Specifically, with a combined scaling factor of $2^{-k}$, as in this example, the sum will contain no more than ($k + 1$) binary digits.

Thus, the sum can be expressed as $a_0 + a_1.2 + a_2.2^2 + a_3.2^3 + ... + a_k 2^k$.

Step 404, computing the bit decomposition of the sum, therefore involves finding the bit values $a_i$ for values of $i$ from 0 to $k$, namely $a_0$, $a_1$, $a_2$, $a_3$, ..., $a_k$.

Step 406 then involves proving that each of the bit values is in fact a binary value, by proving that, for each value of $i$ from 0 to $k$, $a_i \bullet (1 - a_i) = 0$.

If required, it can then be checked that the bit decomposition of the sum into the bit values $a_0$, $a_1$, $a_2$, $a_3$, ..., $a_k$ is correct, by proving that:

$$2^k.e + (2^k.e - c.d) = a_0 + a_1.2 + a_2.2^2 + a_3.2^3 + ... + a_k 2^k.$$

Figure 5 illustrates an example of a method 500 for determining whether the difference between, on the one hand, the inverse of the combined scaling factor and, on the other hand, the difference between, firstly, the product of the third fixed-point value and the inverse of the combined scaling factor and, secondly, the product of the first fixed-point value and the second fixed-point value, is greater than or equal to zero.

In step 502, the difference between, on the one hand, the inverse of the combined scaling factor and, on the other hand, the difference between, firstly, the product of the third fixed-point value and the inverse of the combined scaling factor and, secondly, the product of the first fixed-point value and the second fixed-point value is formed.

In order to determine whether this difference is greater than or equal to zero, step 504 comprises computing a bit decomposition of the difference, and step 506 comprises determining whether each bit of the bit decomposition is a binary value.

It is known that the difference between, on the one hand, the inverse of the combined scaling factor and, on the other hand, the difference between, firstly, the product of the third fixed-point value and the inverse of the combined scaling factor and, secondly, the product of the first fixed-point value and the second fixed-point value will have a maximum length that depends on the combined scaling factor. Specifically, with a combined scaling factor of $2^{-k}$, as in this example, the sum will contain no more than ($k + 1$) binary digits.

Thus, the difference can be expressed as $b_0 + b_1.2 + b_2.2^2 + b_3.2^3 + ... + b_k 2^k$.

Step 504, computing the bit decomposition of the difference, therefore involves finding the bit values $b_i$ for values of $i$ from 0 to k, namely $b_0$, $b_1$, $b_2$, $b_3$, ..., $b_k$.

Step 506 then involves proving that each of the bit values is in fact a binary value, by proving that, for each value of $i$ from 0 to $k$, $b_i \bullet (1 - b_i) = 0$.

If required, it can then be checked that the bit decomposition of the difference into the bit values $b_0$, $b_1$, $b_2$, $b_3$, ..., $b_k$ is correct, by proving that:

$$2^k.e - (2^k.e - c.d) = b_0 + b_1.2 + b_2.2^2 + b_3.2^3 + \ldots + b_k 2^k.$$

Thus, if these tests are passed, it can be verified that the third fixed-point value received in step 202 is a correctly truncated result of multiplying the first fixed-point value by the second fixed-point value.

The multiplication of the first fixed-point value by the second fixed-point value will typically be a part of a larger computation, containing many calculations that will need to be verified. Therefore, if it is verified that the third fixed-point value is a correctly truncated result, the process can continue by verifying the next calculation in that larger computation. More generally, if it is verified that the third fixed-point value is a correctly truncated result, that third fixed-point value can be used in a further function.

If it is found that the third fixed-point value is not a correctly truncated result, the third fixed-point value can be rejected. If the verification is performed by the party or parties performing the calculation, then a suitable notification can be sent, for example prompting the calculation to be checked or performed again. If the verification is performed by a party that is verifying a calculation performed by another party or parties, then again a suitable notification can be provided.

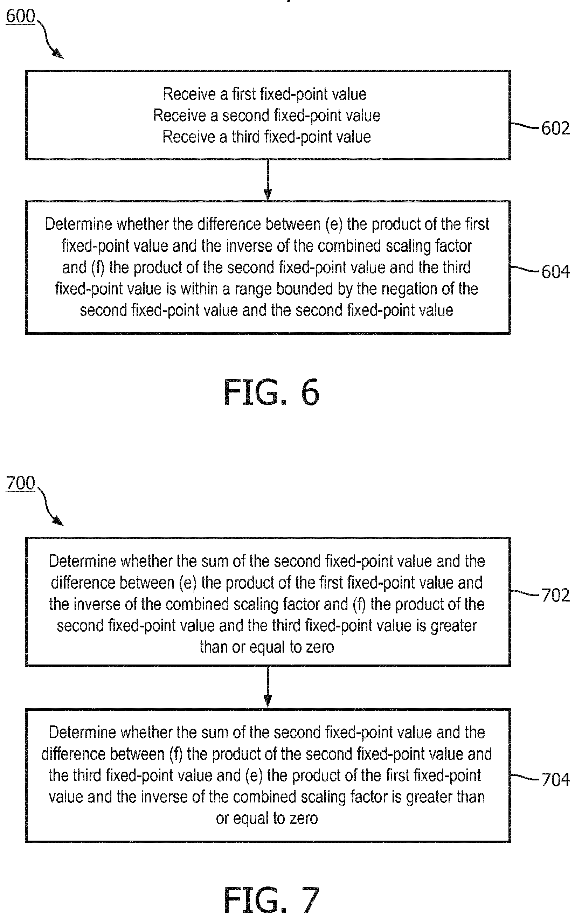

Figure 6 illustrates an example of a method 600 for verifying a calculation. The method 600 is applicable in the case in which the calculation is a division of two fixed-point values.

Thus, in step 602, the method involves receiving a first fixed-point value $c$. The first fixed-point value c represents a first natural number $\tilde{c}$, and the first fixed-point value has a first scaling factor $2^{-k1}$, such that $\tilde{c} = c.2^{-k1}$. Step 602 also involves receiving a second fixed-point value $d$. The second fixed-point value $d$ represents a second natural number $\tilde{d}$, and the second fixed-point value has a second scaling factor $2^{-k2}$, such that $\tilde{d} = d.2^{-k2}$.

Step 602 also involves receiving a third fixed-point value $e$. The third fixed-point value $e$ represents a third natural number $\tilde{e}$, and the third fixed-point value has a third scaling factor $2^{-k3}$, such that $\tilde{e} = e.2^{-k3}$.

It is required to verify that the third fixed-point value $e$ is the correct result of dividing the first fixed-point value $c$ by the second fixed-point value $d$.

One issue that arises when performing arithmetic operations on fixed-point values is that the result of performing a division of two fixed-point values that each have a given scaling factor cannot necessarily be expressed exactly as a third fixed-point value with the same scaling factor. That is, fixed-point values with a scaling factor of $2^{-k}$, as in this example, may accurately represent natural numbers that have up to $k$ binary digits after the radix point (i.e. the equivalent of the decimal point in binary numbers). If one such number is divided by another such number, the result will be a natural number that may have more than $k$ binary digits after the radix point. This cannot be represented perfectly by a fixed-point value with a scaling factor of $2^{-k}$, and so the fixed-point value that is provided as the output of the operation must be generated by truncating the result of the division to reduce the number of digits after the radix point.

Step 604 of the process shown in Figure 6 therefore involves determining whether the third fixed-point value is a correctly truncated result of dividing the first fixed-point value by the second fixed-point value.

For the third fixed-point value $e$ to be correct, we require that $\tilde{e} \approx \tilde{c}/\tilde{d}$, that is $\tilde{c} \approx \tilde{d}.\tilde{e}$. As $\tilde{c} = c.2^{-k1}$, $\tilde{d} = d.2^{-k2}$, and $\tilde{e} = e.2^{-k3}$, this means that we require that $c.2^{-k1} \approx d.2^{-k2}.e.2^{-k3}$, and therefore that $c.2^{(k2+k3-k1)} \approx d.e$. The product of the second scaling factor $2^{-k2}$ and the third scaling factor $2^{-k3}$, divided by the first scaling factor $2^{-k1}$, can then be considered to be a combined scaling factor $2^{-(k2+k3-k1)}$.

It is then recognised here that, if the third fixed-point value is a correctly truncated result of dividing the first fixed-point value by the second fixed-point value, the difference between, on the one hand, the product of the first fixed-point value and the inverse of the combined scaling factor and, on the other hand, the product of the second fixed-point value and the third fixed-point value will lie within a known range. More specifically, this range is bounded by the negation of the second fixed-point value and the second fixed-point value.

That is, if the third fixed-point value $e$ is the correct result of multiplying the first fixed-point value c and the second fixed-point value $d$, then:

$$2^{(k2+k3-k1)}.c - d.e \in \left[-d, d\right].$$

However, for ease of explanation, the illustrated example will now consider one specific case, in which it is required to verify that the third fixed-point value $e$ is the correct result of dividing the first fixed-point value c by the second fixed-point value $d$, in which the first scaling factor $2^{-k1}$, the second scaling factor $2^{-k2}$, and the third scaling factor $2^{-k3}$, are all equal to $2^{-k}$, and so the combined scaling factor $2^{-(k2+k3-k1)}$ is also $2^{-k}$.

Figure 7 illustrates an example of a method 700 for determining whether the difference between, on the one hand, the product of the first fixed-point value and the inverse of the combined scaling factor and, on the other hand, the product of the second fixed-point value and the third fixed-point value is within a range bounded by the negation of the second fixed-point value and the second fixed-point value, that is, for verifying that the relationship $2^k.c - d.e \in [-d,d]$ is satisfied.

Thus, the method 700 recognises that, for the relationship $2^k.c - d.e \in [-d,d]$ to be satisfied, it is necessary for two further relationships to be satisfied, namely:

$$d + (2^k.c - d.e) \geq 0 ,$$

and

$$d + (d.e - 2^k.c) \geq 0 .$$

Thus, step 702 tests the first of these further relationships, and determines whether the sum of, on the one hand, the second fixed-point value and, on the other hand, the difference between, firstly, the product of the first fixed-point value and the inverse of the combined scaling factor and, secondly, the product of the second fixed-point value and the third fixed-point value is greater than or equal to zero.

Similarly, step 704 tests the second of these further relationships, and determines whether the sum of, on the one hand, the second fixed-point value and, on the other hand, the difference between, firstly, the product of the second fixed-point value and the third fixed-point value and, secondly, the product of the first fixed-point value and the inverse of the combined scaling factor is greater than or equal to zero.

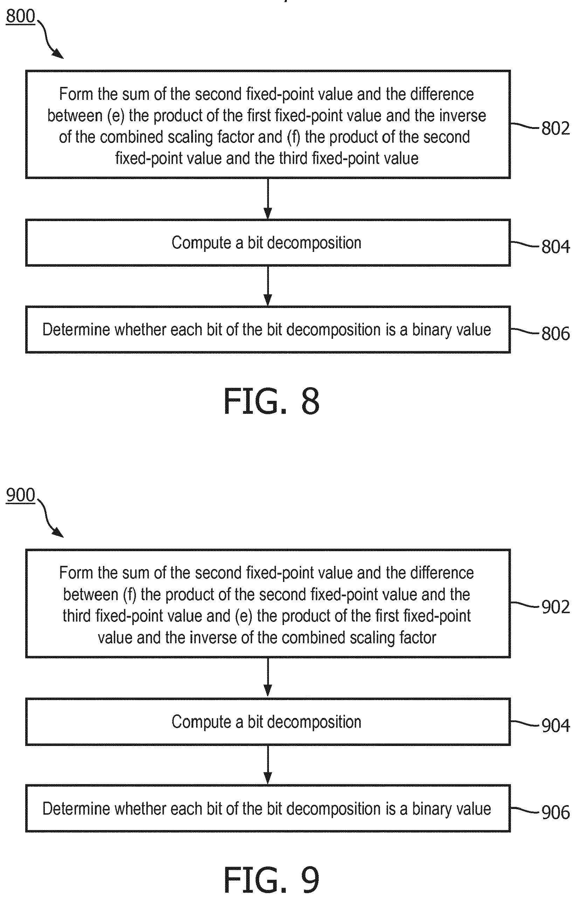

Figure 8 illustrates an example of a method 800 for determining whether the sum of, on the one hand, the second fixed-point value and, on the other hand, the difference between, firstly, the product of the first fixed-point value and the inverse of the combined scaling factor and, secondly, the product of the second fixed-point value and the third fixed-point value is greater than or equal to zero.

In step 802, the sum of, on the one hand, the second fixed-point value and, on the other hand, the difference between, firstly, the product of the first fixed-point value and the inverse of the combined scaling factor and, secondly, the product of the second fixed-point value and the third fixed-point value is formed.

In order to determine whether this sum is greater than or equal to zero, step 804 comprises computing a bit decomposition of the sum, and step 806 comprises determining whether each bit of the bit decomposition is a binary value.

The length of the bit decomposition to be computed in step 804 depends on the magnitude of the second fixed-point value, $d$. If it is known that $d$ has at most $K$ bits, i.e. $|\tilde{d}| \leq 2^{K-k}$, then the sum of, on the one hand, the second fixed-point value and, on the other hand, the difference between, firstly, the product of the first fixed-point value and the inverse of the combined scaling factor and, secondly, the product of the second fixed-point value and the third fixed-point value will contain no more than $(K + 1)$ binary digits.

Thus, the sum can be expressed as $m_0 + m_1.2 + m_2.2^2 + m_3.2^3 + ... + m_K2^K$.

Step 804, computing the bit decomposition of the sum, therefore involves finding the bit values $m_i$ for values of $i$ from 0 to K, namely $m_0, m_1, m_2, m_3, ..., m_K$.

Step 806 then involves proving that each of the bit values is in fact a binary value, by proving that, for each value of $i$ from 0 to $K, m_i \cdot (1 - m_i) = 0$.

If required, it can then be checked that the bit decomposition of the sum into the bit values $m_0, m_1, m_2, m_3, ..., m_K$ is correct, by proving that:

$$d + (2^k.c - d.e) = m_0 + m_1.2 + m_2.2^2 + m_3.2^3 + ... + m_K2^K.$$

Figure 9 illustrates an example of a method 900 for determining whether the sum of, on the one hand, the second fixed-point value and, on the other hand, the difference between, firstly, the product of the second fixed-point value and the third fixed-point value and, secondly, the product of the first fixed-point value and the inverse of the combined scaling factor is greater than or equal to zero.

In step 902, the sum of, on the one hand, the second fixed-point value and, on the other hand, the difference between, firstly, the product of the second fixed-point value and the third fixed-point value and, secondly, the product of the first fixed-point value and the inverse of the combined scaling factor is formed.

In order to determine whether this sum is greater than or equal to zero, step 904 comprises computing a bit decomposition of the sum, and step 906 comprises determining whether each bit of the bit decomposition is a binary value.

The length of the bit decomposition to be computed in step 904 depends on the magnitude of the second fixed-point value, $d$. If it is known that $d$ has at most $K$ bits, i.e. $|\tilde{d}| \leq 2^{K-k}$, then the sum of, on the one hand, the second fixed-point value and, on the other hand, the difference between, firstly, the product of the second fixed-point value and the third fixed-point value and, secondly, the product of the first fixed-point value and the inverse of the combined scaling factor will contain no more than ($K$ + 1) binary digits.

Thus, the sum can be expressed as $n_0 + n_1.2 + n_2.2^2 + n_3.2^3 + ... + n_k2^K$.

Step 904, computing the bit decomposition of the sum, therefore involves finding the bit values $n_i$ for values of $i$ from 0 to $K$, namely $n_0$, $n_1$ $n_2$, $n_3$, ..., $n_K$.

Step 906 then involves proving that each of the bit values is in fact a binary value, by proving that, for each value of $i$ from 0 to $K$, $n_i \cdot (1 - n_i) = 0$.

If required, it can then be checked that the bit decomposition of the sum into the bit values $n_0$, $n_1$, $n_2$, $n_3$, ..., $n_K$ is correct, by proving that:

$$d + (d.e - 2^k.c) = n_0 + n_1.2 + n_2.2^2 + n_3.2^3 + ... + n_K2^K.$$

Thus, if these tests are passed, it can be verified that the third fixed-point value received in step 602 is a correctly truncated result of dividing the first fixed-point value by the second fixed-point value.

The division of the first fixed-point value by the second fixed-point value will typically be a part of a larger computation, containing many calculations that will need to be verified. Therefore, if it is verified that the third fixed-point value is a correctly truncated result, the process can continue by verifying the next calculation in that larger computation. More generally, if it is verified that the third fixed-point value is a correctly truncated result, that third fixed-point value can be used in a further function.

If it is found that the third fixed-point value is not a correctly truncated result, the third fixed-point value can be rejected. If the verification is performed by the party or parties performing the calculation, then a suitable notification can be sent, for example prompting the calculation to be checked or performed again. If the verification is performed by a party that is verifying a calculation performed by another party or parties, then again a suitable notification can be provided.

The methods described herein can be used in a wide range of situations, for example in the technologies of verifiable computation and multiparty computation, and in particular in their application to outsourcing computation. In such settings, it is often needed to receive assurance that computations are performed correctly. The methods described herein are therefore particularly relevant, particularly when computations based on non-integers are needed. For instance, computations in numerical optimization or statistics typically involve non-integers, and performing multiplication and division operations is almost unavoidable. Hence, methods for verifying computations performed on fixed-point numbers are useful.

One example of outsourcing concerns collaborative supply chain management scenarios. In such scenarios, different companies want to optimize their supply chain without having to share sensitive company information. They can achieve this by outsourcing the optimization problem to different cloud parties that each individually do not learn the sensitive data, but can provide a result that is guaranteed to be optimal. In this scenario, it is known how to prove correctness of integer-based optimization algorithms, but fixed-point algorithms often scale better, and so the methods described herein may be used.

Another example concerns distributed medical research, in which cryptographic proofs allow a researcher to prove (to peer reviewers, or the public) that the results of statistical tests are accurate, without the need to reveal the underlying dataset (which indeed is not possible because of patient confidentiality). Statistical tests often cannot be performed using integer arithmetic alone, and require computations based on fixed-point numbers. For instance, the logrank test for testing difference between two Kaplan-Meier survival curves (or more generally, any $X^2$ test) requires proving correctness of fixed-point divisions and multiplications. Thus, methods as described herein can be used to provide cryptographic proof of correctness of this logrank test.

In general, embodiments can be classified in two ways, firstly, what kind of commitment scheme and proof system is used, and secondly, whether or not the sensitive data is hidden from the worker.

Concerning the kind of commitment scheme and proof system, we need a commitment (or encryption) scheme and a proof (or argument) system that allows efficient proofs (or arguments) that commitments satisfy polynomial relations of degree at most two, i.e., involving additions and at most one layer of multiplications.

For computations on the integers (not modulo), it is possible to use the Fujisaki-Okomoto commitment scheme, homomorphic addition, and the multiplication proofs from the document E. Fujisaki and T. Okamoto, "Statistical zero knowledge protocols to prove modular polynomial relations", Advances in Cryptology - CRYPTO '97, 17th Annual International Cryptology Conference, Santa Barbara, California, USA, August 17-21, 1997, Proceedings, pages 16-30, 1997.

An alternative is to use an additively homomorphic commitment scheme modulo a prime, such as Pedersen commitments or ElGamal encryption as described in B. Schoenmakers, Cryptography 2 (2WC13) / Cryptographic Protocols (2WC17) Lecture Notes, 2014. Version 1.0, and proofs of correct multiplication based on Σ-protocols.

A further alternative is to use the Pinocchio verifiable computation scheme and model the proofs as a "quadratic arithmetic program", as described in B. Parno, J. Howell, C. Gentry, and M. Raykova. "Pinocchio: Nearly Practical Verifiable Computation", Proceedings of S&P, 2013.

A first concrete embodiment is described below, in which sensitive data is not hidden from the worker. This may for example apply in a scenario where a medical researcher wants to prove correctness of a statistical test on a dataset, where the researcher has access to the dataset but does not want to disclose it to a reviewer. In this scenario, the researcher is considered a "prover" and the reviewer is considered a "verifier".

To prove correctness of the statistical test, different computations need to be verified, and these will include not only additions and subtractions, but also fixed-point multiplications. Firstly, the prover computes (in a provably correct manner) commitments to the values that are to be multiplied or divided. Then, it is necessary to prove the correctness of the multiplication or division. In this embodiment, any one of the proof systems described above can be used.

The procedure for multiplication or division is implemented as follows, using the notation indicated above, where, in the case of a multiplication, it is required to verify that the third fixed-point value $e$ is the correct result of multiplying the first fixed-point value $c$ and the second fixed-point value $d$, or, in the case of a division, it is required to verify that the third fixed-point value $e$ is the correct result of dividing the first fixed-point value $c$ by the second fixed-point value $d$.

1. It is taken as given that the prover knows $c$; $d$; $e$; and the prover and verifier both know respective commitments $C$; $D$; $E$ to these values.

2. The prover then provides to the verifier cryptographic proof that the fixed-point computation has been performed correctly. That is, in the case of a multiplication, the prover provides to the verifier cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor. In the case of a division, the prover provides to the verifier cryptographic proof that the difference between (e) the product of the first fixed-point value and the inverse of a combined scaling factor and (f) the product of the second fixed-point value and the third fixed-point value is within a range bounded by the negation of the second fixed-point value and the second fixed-point value. More specifically, the prover provides commitments to the bits of the bit decompositions, as described in steps 404 and 504, or in steps 804 and 904 above, to the verifier.

3. The prover proves correctness of the bit decomposition commitments, i.e. proves that they are all bits, using the proofs (or arguments), which the verifier verifies.

4. The prover proves that the bit decomposition commitments correspond to the values that they are supposed to be bit commitments of, using the proofs (or arguments), which the verifier verifies.

Thus, the prover is able to verify that e is the correct result of the multiplication or division, using the procedure shown in Figure 2 or Figure 6 respectively, operating on the original fixed-point values. The prover and the verifier are both able to verify that e is the correct result of the multiplication or division, using the procedure shown in Figure 2 or Figure 6 respectively, operating on commitments to the original fixed-point values.

A second concrete embodiment is described below, in which the data is sensitive, and is hidden. For example, in a scenario arising in medical research, even the researcher is not allowed to see the dataset. Hence, the computation is done on behalf of the researcher by multiple cloud computation parties. These cloud computation parties act as "provers", and it is required that the researcher and reviewers can both check the results obtained from the cloud computation parties, and hence act as "verifiers".

This embodiment is similar to the first embodiment described above, except that, instead of a single prover holding the data, the data is now secret-shared between multiple provers, and proofs are computed in a distributed way. For example, the process may use Shamir secret sharing between three provers. This embodiment can be based on either the second or third commitment scheme and proof system described above. Note that, in this case, the proof system needs to be zero-knowledge and so, for Pinocchio, its zero-knowledge variant needs to be used.

The procedure for multiplication or division is implemented as follows, using the notation indicated above, where, in the case of a multiplication, it is required to verify that the third fixed-point value $e$ is the correct result of multiplying the first fixed-point value $c$ and the second fixed-point value $d$, or, in the case of a division, it is required to verify that the third fixed-point value $e$ is the correct result of dividing the first fixed-point value $c$ by the second fixed-point value $d$.

1. The result e is computed using a multi-party computation fixed-point multiplication or division protocol, for example as described in "Design of large scale applications of secure multiparty computation: secure linear programming", S. de Hoogh. PhD thesis, Eindhoven University of Technology, 2012. It is then taken as given that $c$; $d$; $e$ are Shamir secret-shared between multiple provers; and the provers and one or more verifier know respective commitments $C$; $D$; $E$ to those values.

2. The provers run a multi-party computation protocol to obtain secret-shared bit decompositions of the appropriate values, for example as described in "Design of large scale applications of secure multiparty computation: secure linear programming", S. de Hoogh. PhD thesis, Eindhoven University of Technology, 2012. The provers then provide commitment shares to the verifier, who reconstructs the commitment from the shares. This can be achieved as described, for example, in "Certificate validation in secure computation and its use in verifiable linear programming", S. de Hoogh, B. Schoenmakers, and M. Veeningen, Progress in Cryptology - AFRICACRYPT 2016 - 8th International Conference on Cryptology in Africa, Fes, Morocco, April 13-15, 2016, Proceedings, pages 265-284, 2016); or as described in "Trinocchio: Privacy-friendly outsourcing by distributed verifiable computation", B. Schoenmakers, M. Veeningen, and N. de Vreede, IACR Cryptology ePrint Archive, 2015:480, 2015. In the Pinocchio case, commitments to multiple values from the same computation are typically combined into a small number of group elements, and so typically this step does not take place exactly once for every multiplication or division.

3. The provers prove correctness of the bit decomposition commitments using the zero-knowledge proofs (or arguments) in a distributed way, for example ElGamal (as described in "Certificate validation in secure computation and its use in verifiable linear programming", S. de Hoogh, B. Schoenmakers, and M. Veeningen, Progress in Cryptology - AFRICACRYPT 2016 - 8th International Conference on Cryptology in Africa, Fes, Morocco, April 13-15, 2016, Proceedings, pages 265-284, 2016); Pinocchio (as described in "Trinocchio: Privacy-friendly outsourcing by distributed verifiable computation", B. Schoenmakers, M. Veeningen, and N. de Vreede, IACR Cryptology ePrint Archive, 2015:480, 2015); or Pedersen (as a natural extension to the description in "Certificate validation in secure computation and its use in verifiable linear programming", cited above). The verifier verifies this.

4. The prover proves correspondence of the bit decomposition commitments using the zero-knowledge proofs (or arguments), which the verifier verifies.

It was mentioned above that this embodiment can be based on either the second or third proof system described above. In order to use the first (Fujisaki-Okomoto) commitment scheme while hiding sensitive inputs from provers, multiparty computation over the integers (as described in "Linear Integer Secret Sharing", R. Thorbek, PhD thesis, University of Aarhus, 2009) can be used, provided that the bit decomposition protocols from the document in "Design of large scale applications of secure multiparty computation: secure linear programming", cited above, translate to this setting.

There are thus described techniques for verifying computations performed using fixed-point values.

These techniques may be performed on suitable hardware, programmed with an appropriate computer program. Thus, there is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention.

It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include any non-transitory machine-readable medium for data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  A method of verifying a calculation, the method comprising:

    receiving a plurality of multiplicand fixed-point values representing respective natural numbers, wherein the multiplicand fixed-point values have respective multiplicand scaling factors;
    receiving a product fixed-point value representing a respective natural number, wherein the product fixed-point value has a product scaling factor; and
    determining whether the product fixed-point value is a correctly truncated result of multiplying the multiplicand fixed-point values together by:
    determining whether the difference between (a) the product of the product fixed-point value and the inverse of a combined scaling factor and (b) the product of the multiplicand fixed-point values is within a range bounded by the negation of the inverse of the combined scaling factor and the inverse of the combined scaling factor, wherein the combined scaling factor is equal to the product of the multiplicand scaling factors divided by the product scaling factor.

2.  A method as claimed in claim 1, wherein the step of determining whether the difference between (a) the product of the product fixed-point value and the inverse of the combined scaling factor and (b) the product of the multiplicand fixed-point values is within a range bounded by the negation of the inverse of the combined scaling factor and the inverse of the combined scaling factor comprises:

    determining whether the sum of (c) the inverse of the combined scaling factor and (d) the difference between (a) the product of the product fixed-point value and the inverse of the combined scaling factor and (b) the product of the multiplicand fixed-point values is greater than or equal to zero; and
    determining whether the difference between (c) the inverse of the combined scaling factor and (d) the difference between (a) the product of the product fixed-point value and the inverse of the combined scaling factor and (b) the product of the multiplicand fixed-point values is greater than or equal to zero.

3.  A method as claimed in claim 2, wherein the step of determining whether the sum of (c) the inverse of the combined scaling factor and (d) the difference between (a) the product of the product fixed-point value and the inverse of the combined scaling factor and (b) the product of the multiplicand fixed-point values is greater than or equal to zero comprises:

    forming the sum of (c) the inverse of the combined scaling factor and (d) the difference between (a) the product of the product fixed-point value and the inverse of the combined scaling factor and (b) the product of the multiplicand fixed-point values;
    computing a bit decomposition thereof; and
    determining whether each bit of the bit decomposition is a binary value.

4.  A method as claimed in claim 2, wherein the step of determining whether the difference between (c) the inverse of the combined scaling factor and (d) the difference between (a) the product of the product fixed-point value and the inverse of the combined scaling factor and (b) the product of the multiplicand fixed-point values is greater than or equal to zero comprises:

> forming the difference between (c) the inverse of the combined scaling factor and (d) the difference between (a) the product of the product fixed-point value and the inverse of the combined scaling factor and (b) the product of the multiplicand fixed-point values;
> computing a bit decomposition thereof; and
> determining whether each bit of the bit decomposition is a binary value.

5. A method as claimed in claim 1, comprising providing to a verifier commitments of said plurality of multiplicand fixed-point values and cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor.

6. A method as claimed in claim 5, comprising obtaining said commitments of said plurality of multiplicand fixed-point values and said cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor using multi-party computation.

7. A method as claimed in claim 1, comprising performing said method using multi-party computation.

8. A method as claimed in claim 1, comprising using the product fixed-point value in a further function only if it is determined that it is a correctly truncated result of multiplying the multiplicand fixed-point values together.

9. A non-transitory machine-readable medium encoded with instructions for performing a method of verifying a calculation, the instructions comprising:

> instructions for receiving a plurality of multiplicand fixed-point values representing respective natural numbers, wherein the multiplicand fixed-point values have respective multiplicand scaling factors;
> instructions for receiving a product fixed-point value representing a respective natural number, wherein the product fixed-point value has a product scaling factor; and
> instructions for determining whether the product fixed-point value is a correctly truncated result of multiplying the multiplicand fixed-point values together by:
> determining whether the difference between (a) the product of the product fixed-point value and the inverse of a combined scaling factor and (b) the product of the multiplicand fixed-point values is within a range bounded by the negation of an inverse of the combined scaling factor and the inverse of the combined scaling factor, wherein the combined scaling factor is equal to the product of the multiplicand scaling factors divided by the product scaling factor.

10. A device for verifying a calculation, the device comprising:

> a memory; and
> a processor in communication with the memory, the processor being configured to:

> > receive a plurality of multiplicand fixed-point values representing respective natural numbers, wherein the multiplicand fixed-point values have respective multiplicand scaling factors;
> > receive a product fixed-point value representing a respective natural number, wherein the product fixed-point value has a product scaling factor; and
> > determine whether the product fixed-point value is a correctly truncated result of multiplying the multiplicand fixed-point values together by:
> > determining whether the difference between (a) the product of the product fixed-point value and the inverse of a combined scaling factor and (b) the product of the multiplicand fixed-point values is within a range bounded by the negation of an inverse of the combined scaling factor and the inverse of the combined scaling factor, wherein the combined scaling factor is equal to the product of the multiplicand scaling factors divided by the product scaling factor.

**11.** A device as claimed in claim 10, wherein the processor is configured to take part in a multi-party computation for receiving the plurality of multiplicand fixed-point values representing respective natural numbers; receiving the product fixed-point value representing a respective natural number; and determining whether the product fixed-point value is a correctly truncated result of multiplying the multiplicand fixed-point values together.

**12.** A method of verifying a calculation, wherein a prover has performed a method comprising:

> receiving a plurality of multiplicand fixed-point values representing respective natural numbers, wherein the multiplicand fixed-point values have respective multiplicand scaling factors;
> receiving a product fixed-point value representing a respective natural number, wherein the product fixed-point value has a product scaling factor; and
> determining whether the product fixed-point value is a correctly truncated result of multiplying the multiplicand fixed-point values together by:

>> determining whether the difference between (a) the product of the product fixed-point value and the inverse of a combined scaling factor and (b) the product of the multiplicand fixed-point values is within a range bounded by the negation of the inverse of the combined scaling factor and the inverse of the combined scaling factor, wherein the combined scaling factor is equal to the product of the multiplicand scaling factors divided by the product scaling factor,
>> the method comprising:

>>> receiving from the prover commitments of said plurality of multiplicand fixed-point values;
>>> receiving from the prover cryptographic proof that the difference between (a) the product of the product fixed-point value and the inverse of a combined scaling factor and (b) the product of the multiplicand fixed-point values is within the range bounded by the negation of the inverse of the combined scaling factor and the inverse of the combined scaling factor; and
>>> verifying the cryptographic proof with respect to the respective commitments.

**13.** A method of verifying a calculation, the method comprising:

> receiving a first fixed-point value representing a first natural number, wherein the first fixed-point value has a first scaling factor;
> receiving a second fixed-point value representing a second natural number, wherein the second fixed-point value has a second scaling factor;
> receiving a third fixed-point value representing a third natural number, wherein the third fixed-point value has a third scaling factor; and
> determining whether the third fixed-point value is a correctly truncated result of dividing the first fixed-point value by the second fixed-point value by:
> determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor.

**14.** A non-transitory machine-readable medium encoded with instructions for performing a method of verifying a calculation, the instructions comprising:

> instructions for receiving a first fixed-point value representing a first natural number, wherein the first fixed-point value has a first scaling factor;
> instructions for receiving a second fixed-point value representing a second natural number, wherein the second fixed-point value has a second scaling factor;
> instructions for receiving a third fixed-point value representing a third natural number, wherein the third fixed-point value has a third scaling factor; and
> instructions for determining whether the third fixed-point value is a correctly truncated result of dividing the first fixed-point value by the second fixed-point value by:
> determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor.

15. A device for verifying a calculation, the device comprising:

a memory; and
a processor in communication with the memory, the processor being configured to:

receive a first fixed-point value representing a first natural number, wherein the first fixed-point value has a first scaling factor;
receive a second fixed-point value representing a second natural number, wherein the second fixed-point value has a second scaling factor;
receive a third fixed-point value representing a third natural number, wherein the third fixed-point value has a third scaling factor; and
determine whether the third fixed-point value is a correctly truncated result of dividing the first fixed-point value by the second fixed-point value by:
determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor.

16. A method of verifying a calculation, wherein a prover has performed a method comprising:

receiving a first fixed-point value representing a first natural number, wherein the first fixed-point value has a first scaling factor;
receiving a second fixed-point value representing a second natural number, wherein the second fixed-point value has a second scaling factor;
receiving a third fixed-point value representing a third natural number, wherein the third fixed-point value has a third scaling factor; and
determining whether the third fixed-point value is a correctly truncated result of dividing the first fixed-point value by the second fixed-point value by:

determining whether the difference between (e) the product of the first fixed-point value and the inverse of a combined scaling factor and (f) the product of the second fixed-point value and the third fixed-point value is within a range bounded by the negation of the second fixed-point value and the second fixed-point value, wherein the combined scaling factor is equal to the product of the second scaling factor and the third scaling factor, divided by the first scaling factor,
the method comprising:

receiving from the prover commitments of said first, second, and third multiplicand fixed-point values;
receiving from the prover cryptographic proof that the difference between (e) the product of the first fixed-point value and the inverse of a combined scaling factor and (f) the product of the second fixed-point value and the third fixed-point value is within the range bounded by the negation of the second fixed-point value and the second fixed-point value; and
verifying the cryptographic proof with respect to the respective commitments.

**Patentansprüche**

1. Eine Methode zum Verifizieren einer Berechnung, die Folgendes umfasst:

Abrufen mehrerer Multiplikanden-Festkommawerte, die den jeweiligen natürlichen Zahlen entsprechen, wobei die Multiplikanden-Festkommawerte über entsprechende Multiplikanden-Skalierungsfaktoren verfügen;
Abrufen eines Produkt-Festkommawerts, der2016P01098WE der jeweiligen natürlichen Zahl entspricht, wobei der Produkt-Festkommawert einen Produktskalierungsfaktor umfasst; und
Ermitteln, ob es sich beim Produkt-Festkommawert um ein korrekt gekürztes Ergebnis der Multiplikation der Multiplikanden-Festkommawerte handelt, indem folgender Schritt durchgeführt wird:

Ermitteln, ob die Differenz zwischen (a) dem Produkt aus dem Produkt-Festkommawert und dem Kehrwert eines kombinierten Skalierungsfaktors und (b) dem Produkt der Multiplikanden-Festkommawerte innerhalb eines Bereichs liegt, der durch die Inversion des Kehrwerts des kombinierten Skalierungsfaktors und den Kehrwert des kombinierten Skalierungsfaktors eingegrenzt ist, wobei der kombinierte Skalierungsfaktor dem durch den Produkt-Skalierungsfaktor dividierten Produkt der Multiplikanden-Skalierungsfaktoren entspricht.

2. Eine Methode gemäß Anspruch 1,
wobei das Ermitteln, ob die Differenz zwischen (a) dem Produkt aus dem Produkt-Festkommawert und dem Kehrwert eines kombinierten Skalierungsfaktors und (b) dem Produkt der Multiplikanden-Festkommawerte innerhalb eines Bereichs liegt, der durch die Inversion des Kehrwerts des kombinierten Skalierungsfaktors und den Kehrwert des kombinierten Skalierungsfaktors eingegrenzt ist, folgende Schritte umfasst:

Ermitteln, ob die Summe aus (c) dem Kehrwert des kombinierten Skalierungsfaktors und (d) der Differenz zwischen (a) dem Produkt aus dem Produkt-Festkommawert und dem Kehrwert des kombinierten Skalierungsfaktors und (b) dem Produkt aus den Multiplikanden-Festkommawerten mindestens Null entspricht; und
Ermitteln, ob die Differenz zwischen (c) dem Kehrwert des kombinierten Skalierungsfaktors und (d) der Differenz zwischen (a) dem Produkt aus dem Produkt-Festkommawert und dem Kehrwert des kombinierten Skalierungsfaktors und (b) dem Produkt aus den Multiplikanden-Festkommawerten mindestens Null entspricht.

3. Eine Methode gemäß Anspruch 2,
wobei das Ermitteln, ob die Summe aus (c) dem Kehrwert des kombinierten Skalierungsfaktors und (d) der Differenz zwischen (a) dem Produkt aus dem Produkt-Festkommawert und dem Kehrwert des kombinierten Skalierungsfaktors und (b) dem Produkt aus den Multiplikanden-Festkommawerten mindestens Null entspricht, folgende Schritte umfasst:

Bilden der Summe aus (c) dem Kehrwert des kombinierten Skalierungsfaktors und (d) der Differenz zwischen (a) dem Produkt aus dem Produkt-Festkommawert und dem Kehrwert des kombinierten Skalierungsfaktors und (b) dem Produkt aus den Multiplikanden-Festkommawerten;
Berechnen einer Bit-Zerlegung hiervon; und
Ermitteln, ob es sich bei den einzelnen Bits der Bit-Zerlegung jeweils um einen binären Wert handelt.

4. Eine Methode gemäß Anspruch 2,
wobei das Ermitteln, ob die Differenz zwischen (c) dem Kehrwert des kombinierten Skalierungsfaktors und (d) der Differenz zwischen (a) dem Produkt aus dem Produkt-Festkommawert und dem Kehrwert des kombinierten Skalierungsfaktors und (b) dem Produkt aus den Multiplikanden-Festkommawerten mindestens Null entspricht, folgende Schritte umfasst:

Bilden der Differenz zwischen (c) dem Kehrwert des kombinierten Skalierungsfaktors und (d) der Differenz zwischen (a) dem Produkt aus dem Produkt-Festkommawert und dem Kehrwert des kombinierten Skalierungsfaktors und (b) dem Produkt aus den Multiplikanden-Festkommawerten;
Berechnen einer Bit-Zerlegung hiervon; und
Ermitteln, ob es sich bei den einzelnen Bits der Bit-Zerlegung jeweils um einen binären Wert handelt.

5. Eine Methode gemäß Anspruch 1,
die das Bereitstellen von Bindungen der Multiplikanden-Festkommawerte sowie des kryptographischen Nachweises für einen Prüfer umfasst, dass die Differenz zwischen (a) dem Produkt aus dem Produkt-Festkommawert und dem Kehrwert des kombinierten Skalierungsfaktors und (b) dem Produkt der Multiplikanden-Festkommawerte innerhalb des Bereichs liegt, der durch die Inversion des Kehrwerts des kombinierten Skalierungsfaktors und den Kehrwert des kombinierten Skalierungsfaktors eingegrenzt ist.

6. Eine Methode gemäß Anspruch 5,
die das Abrufen der Bindungen der Multiplikanden-Festkommawerte sowie des kryptographischen, mehrfach berechneten Nachweises umfasst, dass die Differenz zwischen (a) dem Produkt aus dem Produkt-Festkommawert und dem Kehrwert des kombinierten Skalierungsfaktors und (b) dem Produkt der Multiplikanden-Festkommawerte innerhalb des Bereichs liegt, der durch die Inversion des Kehrwerts des kombinierten Skalierungsfaktors und den Kehrwert des kombinierten Skalierungsfaktors eingegrenzt ist.

7. Eine Methode gemäß Anspruch 1,

die das mehrfach berechnete Durchführen der Methode umfasst.

8. Eine Methode gemäß Anspruch 1,
für die der Produkt-Festkommawert nur dann in einer weiteren Funktion verwendet wird, wenn ermittelt wurde, dass es sich um ein ordnungsgemäß gekürztes Ergebnis der Multiplikation der Multiplikations- und Festkommawerte handelt.

9. Ein nicht flüchtiges maschinenlesbares Medium, das mit Anweisungen für das Durchführen einer Methode zum Verifizieren einer Berechnung codiert ist, wobei die Anweisungen Folgendes umfassen:

Anweisungen zum Abrufen mehrerer Multiplikanden-Festkommawerte, die den jeweiligen natürlichen Zahlen entsprechen, wobei die Multiplikanden-Festkommawerte über entsprechende Multiplikanden-Skalierungsfaktoren verfügen;
Anweisungen zum Abrufen eines Produkt-Festkommawerts, der der jeweiligen natürlichen Zahl entspricht, wobei der Produkt-Festkommawert einen Produktskalierungsfaktor umfasst; und
Anweisungen zum Ermitteln, ob es sich beim Produkt-Festkommawert um ein korrekt gekürztes Ergebnis der Multiplikation der Multiplikanden-Festkommawerte handelt, indem folgender Schritt durchgeführt wird:
Ermitteln, ob die Differenz zwischen (a) dem Produkt aus dem Produkt-Festkommawert und dem Kehrwert eines kombinierten Skalierungsfaktors und (b) dem Produkt der Multiplikanden-Festkommawerte innerhalb eines Bereichs liegt, der durch die Inversion des Kehrwerts des kombinierten Skalierungsfaktors und den Kehrwert des kombinierten Skalierungsfaktors eingegrenzt ist, wobei der kombinierte Skalierungsfaktor dem durch den Produkt-Skalierungsfaktor dividierten Produkt der Multiplikanden-Skalierungsfaktoren entspricht.

10. Ein Gerät zum Verifizieren einer Berechnung, das Folgendes umfasst:

einen Speicher; und
einen Prozessor, der mit dem Speicher kommuniziert, und der folgende Schritte durchführt:

Abrufen mehrerer Multiplikanden-Festkommawerte, die den jeweiligen natürlichen Zahlen entsprechen, wobei die Multiplikanden-Festkommawerte über entsprechende Multiplikanden-Skalierungsfaktoren verfügen;
Abrufen eines Produkt-Festkommawerts, der der jeweiligen natürlichen Zahl entspricht, wobei der Produkt-Festkommawert einen Produktskalierungsfaktor umfasst; und
Ermitteln, ob es sich beim Produkt-Festkommawert um ein korrekt gekürztes Ergebnis der Multiplikation der Multiplikanden-Festkommawerte handelt, indem folgender Schritt durchgeführt wird:
Ermitteln, ob die Differenz zwischen (a) dem Produkt aus dem Produkt-Festkommawert und dem Kehrwert eines kombinierten Skalierungsfaktors und (b) dem Produkt der Multiplikanden-Festkommawerte innerhalb eines Bereichs liegt, der durch die Inversion des Kehrwerts des kombinierten Skalierungsfaktors und den Kehrwert des kombinierten Skalierungsfaktors eingegrenzt ist, wobei der kombinierte Skalierungsfaktor dem durch den Produkt-Skalierungsfaktor dividierten Produkt der Multiplikanden-Skalierungsfaktoren entspricht.

11. Das Gerät gemäß Anspruch 10,
wobei der Prozessor Teil einer Mehrfachberechnung ist, um die Multiplikanden-Festkommawerte abzurufen, die jeweils natürlichen Zahlen entsprechen; um den Produkt-Festkommawert abzurufen, der jeweils einer natürlichen Zahl entspricht; und um zu ermitteln, ob es sich beim Produkt-Festkommawert um ein ordnungsgemäß gekürztes Ergebnis der Multiplikation der Multiplikanden-Festkommawerte handelt.

12. Eine Methode zum Verifizieren einer Berechnung, wobei ein Prüfer eine Methode durchführt, die folgende Schritte umfasst:

Abrufen mehrerer Multiplikanden-Festkommawerte, die den jeweiligen natürlichen Zahlen entsprechen, wobei die Multiplikanden-Festkommawerte über entsprechende Multiplikanden-Skalierungsfaktoren verfügen;
Abrufen eines Produkt-Festkommawerts, der der jeweiligen natürlichen Zahl entspricht, wobei der Produkt-Festkommawert einen Produktskalierungsfaktor umfasst; und
Ermitteln, ob es sich beim Produkt-Festkommawert um ein korrekt gekürztes Ergebnis der Multiplikation der Multiplikanden-Festkommawerte handelt, indem folgender Schritt durchgeführt wird:

Ermitteln, ob die Differenz zwischen (a) dem Produkt aus dem Produkt-Festkommawert und dem Kehrwert eines kombinierten Skalierungsfaktors und (b) dem Produkt der Multiplikanden-Festkommawerte innerhalb eines Bereichs liegt, der durch die Inversion des Kehrwerts des kombinierten Skalierungsfaktors und den Kehrwert des kombinierten Skalierungsfaktors eingegrenzt ist, wobei der kombinierte Skalierungsfaktor dem durch den Produkt-Skalierungsfaktor dividierten Produkt der Multiplikanden-Skalierungsfaktoren entspricht,
wobei die Methode Folgendes umfasst:

Abrufen der Bindungen der Multiplikanden-Festkommawerte vom Prüfgerät;
Abrufen eines kryptographischen Nachweises vom Prüfgerät, dass die Differenz zwischen (a) dem Produkt aus dem Produkt-Festkommawert und dem Kehrwert eines kombinierten Skalierungsfaktors und (b) dem Produkt der Multiplikanden-Festkommawerte innerhalb eines Bereichs liegt, der durch die Inversion des Kehrwerts des kombinierten Skalierungsfaktors und den Kehrwert des kombinierten Skalierungsfaktors eingegrenzt ist, und
Verifizieren des kryptographischen Nachweises in Bezug auf die jeweiligen Bindungen.

13. Eine Methode zum Verifizieren einer Berechnung, wobei die Methode Folgendes umfasst:

Abrufen eines ersten Festkommawerts, der einer ersten natürlichen Zahl entspricht, wobei der erste Festkommawert einen ersten Skalierungsfaktor umfasst;
Abrufen eines zweiten Festkommawerts, der einer zweiten natürlichen Zahl entspricht, wobei der zweite Festkommawert einen zweiten Skalierungsfaktor umfasst;
Abrufen eines dritten Festkommawerts, der der dritten natürlichen Zahl entspricht, wobei der dritte Festkommawert einen dritten Skalierungsfaktor umfasst; und
Ermitteln, ob es sich beim dritten Festkommawert um ein ordnungsgemäß gekürztes Ergebnis der Division des ersten Festkommawerts durch den zweiten Festkommawert handelt, indem folgender Schritt durchgeführt wird:
Ermitteln, ob die Differenz zwischen (e) dem Produkt aus dem ersten Festkommawert und dem Kehrwert eines kombinierten Skalierungsfaktors und (f) dem Produkt aus dem zweiten Festkommawert und dem dritten Festkommawert innerhalb eines Bereichs liegt, der durch die Inversion des zweiten Festkommawerts und den zweiten Festkommawert eingegrenzt ist, wobei der kombinierte Skalierungsfaktor dem durch den ersten Skalierungsfaktor dividierten Produkt aus dem zweiten Skalierungsfaktor und dem dritten Skalierungsfaktor entspricht.

14. Ein nicht flüchtiges maschinenlesbares Medium, das mit Anweisungen für das Durchführen einer Methode zum Verifizieren einer Berechnung codiert ist, wobei die Anweisungen Folgendes umfassen:

Anweisungen zum Abrufen eines ersten Festkommawerts, der einer ersten natürlichen Zahl entspricht, wobei der erste Festkommawert einen ersten Skalierungsfaktor umfasst;
Anweisungen zum Abrufen eines zweiten Festkommawerts, der einer zweiten natürlichen Zahl entspricht, wobei der zweite Festkommawert einen zweiten Skalierungsfaktor umfasst;
Anweisungen zum Abrufen eines dritten Festkommawerts, der der dritten natürlichen Zahl entspricht, wobei der dritte Festkommawert einen dritten Skalierungsfaktor umfasst; und
Anweisungen zum Ermitteln, ob es sich beim dritten Festkommawert um ein ordnungsgemäß gekürztes Ergebnis der Division des ersten Festkommawerts durch den zweiten Festkommawert handelt, indem folgender Schritt durchgeführt wird:
Ermitteln, ob die Differenz zwischen (e) dem Produkt aus dem ersten Festkommawert und dem Kehrwert eines kombinierten Skalierungsfaktors und (f) dem Produkt aus dem zweiten Festkommawert und dem dritten Festkommawert innerhalb eines Bereichs liegt, der durch die Inversion des zweiten Festkommawerts und den zweiten Festkommawert eingegrenzt ist, wobei der kombinierte Skalierungsfaktor dem durch den ersten Skalierungsfaktor dividierten Produkt aus dem zweiten Skalierungsfaktor und dem dritten Skalierungsfaktor entspricht.

15. Ein Gerät zum Verifizieren einer Berechnung, das Folgendes umfasst:

einen Speicher; und
einen Prozessor, der mit dem Speicher kommuniziert und für Folgendes konfiguriert ist:

Abrufen eines ersten Festkommawerts, der einer ersten natürlichen Zahl entspricht, wobei der erste Festkommawert einen ersten Skalierungsfaktor umfasst;

Abrufen eines zweiten Festkommawerts, der einer zweiten natürlichen Zahl entspricht, wobei der zweite Festkommawert einen zweiten Skalierungsfaktor umfasst;

Abrufen eines dritten Festkommawerts, der der dritten natürlichen Zahl entspricht, wobei der dritte Festkommawert einen dritten Skalierungsfaktor umfasst; und

Ermitteln, ob es sich beim dritten Festkommawert um ein ordnungsgemäß gekürztes Ergebnis der Division des ersten Festkommawerts durch den zweiten Festkommawert handelt, indem folgender Schritt durchgeführt wird:

Ermitteln, ob die Differenz zwischen (e) dem Produkt aus dem ersten Festkommawert und dem Kehrwert eines kombinierten Skalierungsfaktors und (f) dem Produkt aus dem zweiten Festkommawert und dem dritten Festkommawert innerhalb eines Bereichs liegt, der durch die Inversion des zweiten Festkommawerts und den zweiten Festkommawert eingegrenzt ist, wobei der kombinierte Skalierungsfaktor dem durch den ersten Skalierungsfaktor dividierten Produkt aus dem zweiten Skalierungsfaktor und dem dritten Skalierungsfaktor entspricht.

16. Eine Methode zum Verifizieren einer Berechnung, wobei ein Prüfer eine Methode durchführt, die folgende Schritte umfasst:

Abrufen eines ersten Festkommawerts, der einer ersten natürlichen Zahl entspricht, wobei der erste Festkommawert einen ersten Skalierungsfaktor umfasst;

Abrufen eines zweiten Festkommawerts, der einer zweiten natürlichen Zahl entspricht, wobei der zweite Festkommawert einen zweiten Skalierungsfaktor umfasst;

Abrufen eines dritten Festkommawerts, der der dritten natürlichen Zahl entspricht, wobei der dritte Festkommawert einen dritten Skalierungsfaktor umfasst; und

Ermitteln, ob es sich beim dritten Festkommawert um ein ordnungsgemäß gekürztes Ergebnis der Division des ersten Festkommawerts durch den zweiten Festkommawert handelt, indem folgender Schritt durchgeführt wird:

Ermitteln, ob die Differenz zwischen (e) dem Produkt aus dem ersten Festkommawert und dem Kehrwert eines kombinierten Skalierungsfaktors und (f) dem Produkt aus dem zweiten Festkommawert und dem dritten Festkommawert innerhalb eines Bereichs liegt, der durch die Inversion des zweiten Festkommawerts und den zweiten Festkommawert eingegrenzt ist, wobei der kombinierte Skalierungsfaktor dem durch den ersten Skalierungsfaktor dividierten Produkt aus dem zweiten Skalierungsfaktor und dem dritten Skalierungsfaktor entspricht,

wobei die Methode Folgendes umfasst:

Abrufen der Bindungen der ersten, zweiten und dritten Multiplikanden-Festkommawerte vom Prüfgerät;

Abrufen des kryptographischen Nachweises vom Prüfgerät, dass die Differenz zwischen (e) dem Produkt aus dem ersten Festkommawert und dem Kehrwert eines kombinierten Skalierungsfaktors und (f) dem Produkt aus dem zweiten Festkommawert und dem dritten Festkommawert innerhalb des Bereichs liegt, der durch die Inversion des zweiten Festkommawerts sowie den zweiten Festkommawert eingegrenzt wird; und

Verifizieren des kryptographischen Nachweises in Bezug auf die jeweiligen Bindungen.

## Revendications

1. Procédé de vérification d'un calcul, ledit procédé comprenant :

la réception d'une pluralité de valeurs en virgule fixe multiplicande représentant des nombres naturels respectifs, dans lequel les valeurs en virgule fixe multiplicande représentent des facteurs d'échelle multiplicande respectifs ;

la réception d'une valeur en virgule fixe produit représentant un entier naturel respectif, dans lequel la valeur en virgule fixe produit présente un facteur d'échelle produit ; et

la détermination si la valeur en virgule fixe produit est un résultat correctement tronqué de la multiplication des valeurs en virgule fixe multiplicande :

par détermination si la différence entre (a) le produit de la valeur en virgule fixe produit et de l'inverse d'un facteur d'échelle combiné et (b) le produit des valeurs en virgule fixe multiplicande se situe dans une plage délimitée par la négation de l'inverse du facteur d'échelle combiné et de l'inverse du facteur d'échelle combiné, dans lequel le facteur d'échelle combiné est égal au produit des facteurs d'échelle multiplicande divisé par le facteur d'échelle produit.

2. Procédé selon la revendication 1, dans lequel l'étape consistant à déterminer si la différence entre (a) le produit de la valeur en virgule fixe produit et de l'inverse du facteur d'échelle combiné et (b) le produit des valeurs en virgule fixe multiplicande se situe dans une plage délimitée par la négation de l'inverse du facteur d'échelle combiné et de l'inverse du facteur d'échelle combiné comprend :

la détermination si la somme de (c) l'inverse du facteur d'échelle combiné et (d) la différence entre (a) le produit de la valeur en virgule fixe produit et de l'inverse du facteur d'échelle combiné et (b) le produit des valeurs en virgule fixe multiplicande sont supérieures ou égales à zéro ; et
la détermination si la différence entre (c) l'inverse du facteur d'échelle combiné et (d) la différence entre (a) le produit de la valeur en virgule fixe produit et de l'inverse du facteur d'échelle combiné et (b) le produit des valeurs en virgule fixe multiplicande sont supérieures ou égales à zéro.

3. Procédé selon la revendication 2, dans lequel l'étape consistant à déterminer si la somme de (c) l'inverse du facteur d'échelle combiné et (d) la différence entre (a) le produit de la valeur en virgule fixe produit et de l'inverse du facteur d'échelle combiné et (b) le produit des valeurs en virgule fixe multiplicande est supérieur ou égal à zéro comprend :

la formation de la somme de (c) l'inverse du facteur d'échelle combiné et (d) de la différence entre (a) le produit de la valeur en virgule fixe produit et de l'inverse du facteur d'échelle combiné et (b) le produit des valeurs en virgule fixe multiplicande ;
le calcul d'une décomposition de bits de celle-ci ; et
la détermination si chaque bit de la décomposition de bits est une valeur binaire.

4. Procédé selon la revendication 2, dans lequel l'étape de détermination si la différence entre (c) l'inverse du facteur d'échelle combiné et (d) la différence entre (a) le produit de la valeur en virgule fixe produit et de l'inverse du facteur d'échelle combiné et (b) le produit des valeurs en virgule fixe multiplicande est supérieur ou égal à zéro comprend :

la formation de la différence entre (c) l'inverse du facteur d'échelle combiné et (d) la différence entre (a) le produit de la valeur en virgule fixe produit et de l'inverse du facteur d'échelle combiné et (b) le produit des valeurs en virgule fixe multiplicande ;
le calcul d'une décomposition de bits de celle-ci ; et
la détermination si chaque bit de la décomposition de bits est une valeur binaire.

5. Procédé selon la revendication 1, comprenant la fourniture à un vérificateur d'engagements de ladite pluralité de valeurs en virgule fixe multiplicande et d'une preuve cryptographique que la différence entre (a) le produit de la valeur en virgule fixe produit et de l'inverse d'un facteur d'échelle combiné et (b) le produit des valeurs de virgule fixe multiplicande se situe dans la plage délimitée par la négation de l'inverse du facteur d'échelle combiné et l'inverse du facteur d'échelle combiné.

6. Procédé selon la revendication 5, comprenant l'obtention desdits engagements de ladite pluralité de valeurs de virgule fixe multiplicande et de ladite preuve cryptographique que la différence entre (a) le produit de la valeur en virgule fixe produit et de l'inverse d'un facteur d'échelle combiné et (b) le produit des valeurs en virgule fixe multiplicande se situe dans la plage délimitée par la négation de l'inverse du facteur d'échelle combiné et l'inverse du facteur d'échelle combiné à l'aide du calcul multipartite.

7. Procédé selon la revendication 1, comprenant la mise en œuvre dudit procédé à l'aide d'un calcul multipartite.

8. Procédé selon la revendication 1, comprenant l'utilisation de la valeur en virgule fixe produit dans une autre fonction uniquement lorsqu'il est déterminé qu'il s'agit d'un résultat correctement tronqué de la multiplication ensemble des valeurs en virgule fixe multiplicande.

9. Support non transitoire lisible par machine codé à l'aide des instructions pour mettre en œuvre un procédé de vérification d'un calcul, lesdites instructions comprenant :

des instructions pour recevoir une pluralité de valeurs en virgule fixe multiplicande représentant des nombres naturels respectifs, dans lequel les valeurs en virgule fixe multiplicande présentent des facteurs d'échelle multiplicande respectifs ;

des instructions pour recevoir une valeur en virgule fixe produit représentant un entier naturel respectif, dans lequel la valeur en virgule fixe produit présente un facteur d'échelle produit ; et

des instructions pour déterminer si la valeur en virgule fixe produit est un résultat correctement tronqué de la multiplication des valeurs en virgule fixe multiplicande :

par détermination si la différence entre (a) le produit de la valeur en virgule fixe produit et de l'inverse d'un facteur d'échelle combiné et (b) le produit des valeurs en virgule fixe multiplicande se situe dans une plage délimitée par la négation d'un inverse du facteur d'échelle combiné et l'inverse du facteur d'échelle combiné, dans lequel le facteur d'échelle combiné est égal au produit des facteurs d'échelle multiplicande divisé par le facteur d'échelle produit.

10. Dispositif de vérification d'un calcul, ledit dispositif comprenant :

une mémoire ; et

un processeur en communication avec la mémoire, ledit processeur étant configuré pour :

recevoir une pluralité de valeurs en virgule fixe multiplicande représentant des nombres naturels respectifs, dans lequel les valeurs en virgule fixe multiplicande présentent des facteurs d'échelle multiplicande respectifs ;

pour recevoir une valeur en virgule fixe produit représentant un entier naturel respectif, dans lequel la valeur en virgule fixe produit présente un facteur d'échelle produit ; et

pour déterminer si la valeur en virgule fixe produit est un résultat correctement tronqué de la multiplication des valeurs en virgule fixe multiplicande :

par détermination si la différence entre (a) le produit de la valeur en virgule fixe produit et de l'inverse d'un facteur d'échelle combiné et (b) le produit des valeurs en virgule fixe multiplicande se situe dans une plage délimitée par la négation d'un inverse de le facteur d'échelle combiné et l'inverse du facteur d'échelle combiné, dans lequel le facteur d'échelle combiné est égal au produit des facteurs d'échelle multiplicande divisé par le facteur d'échelle produit.

11. Dispositif selon la revendication 10, dans lequel le processeur est configuré pour participer à un calcul multipartite pour recevoir la pluralité de valeurs en virgule fixe multiplicande représentant des nombres naturels respectifs ;

pour recevoir la valeur en virgule fixe produit représentant un entier naturel respectif ; et

pour déterminer si la valeur en virgule fixe produit est un résultat correctement tronqué de la multiplication des valeurs en virgule fixe multiplicande.

12. Procédé de vérification d'un calcul, dans lequel un démonstrateur a mis en œuvre un procédé comprenant la réception d'une pluralité de valeurs en virgule fixe multiplicande représentant des nombres naturels respectifs, dans lequel les valeurs en virgule fixe multiplicande présentent des facteurs d'échelle multiplicande respectifs ;

la réception d'une valeur en virgule fixe produit représentant un entier naturel respectif, dans lequel la valeur en virgule fixe produit présente un facteur d'échelle produit ; et

la détermination si la valeur en virgule fixe produit est un résultat correctement tronqué de la multiplication des valeurs en virgule fixe multiplicande :

par détermination si la différence entre (a) le produit de la valeur en virgule fixe produit et de l'inverse d'un facteur d'échelle combiné et (b) le produit des valeurs en virgule fixe multiplicande se situe dans une plage délimitée par la négation de l'inverse de le facteur d'échelle combiné et l'inverse du facteur d'échelle combiné, dans lequel le facteur d'échelle combiné est égal au produit des facteurs d'échelle multiplicande divisé par le facteur d'échelle produit,

ledit procédé comprenant :

la réception du démonstrateur des engagements de ladite pluralité de valeurs en virgule fixe multiplicande ;

la réception du démonstrateur d'une preuve cryptographique que la différence entre (a) le produit de la valeur en virgule fixe produit et de l'inverse d'un facteur d'échelle combiné et (b) le produit des valeurs en virgule fixe multiplicande se situe dans la plage délimitée par la négation de l'inverse du facteur d'échelle combiné et l'inverse du facteur d'échelle combiné ; et

la vérification de la preuve cryptographique par rapport aux engagements respectifs.

13. Procédé de vérification d'un calcul, ledit procédé comprenant :

la réception d'une première valeur en virgule fixe représentant un premier entier naturel, dans lequel la première valeur en virgule fixe présente un premier facteur de mise à l'échelle ;

la réception d'une deuxième valeur en virgule fixe représentant un deuxième entier naturel, dans lequel la deuxième valeur en virgule fixe présente un deuxième facteur d'échelle ;

la réception d'une troisième valeur en virgule fixe représentant un troisième entier naturel, dans lequel la troisième valeur en virgule fixe présente un troisième facteur d'échelle ; et

la détermination si la troisième valeur en virgule fixe est un résultat correctement tronqué de la division de la première valeur en virgule fixe par la deuxième valeur en virgule fixe :

par détermination si la différence entre (e) le produit de la première valeur en virgule fixe et de l'inverse d'un facteur d'échelle combiné et (f) le produit de la deuxième valeur en virgule fixe et de la troisième valeur en virgule fixe se situe dans une plage délimitée par la négation de la deuxième valeur en virgule fixe et la deuxième valeur en virgule fixe, dans lequel le facteur d'échelle combiné est égal au produit du deuxième facteur d'échelle et du troisième facteur d'échelle, divisé par le premier facteur d'échelle.

14. Support non transitoire lisible par machine codé à l'aide des instructions pour mettre en œuvre un procédé de vérification d'un calcul, lesdites instructions comprenant :

des instructions pour recevoir une première valeur en virgule fixe représentant un premier entier naturel, dans lequel la première valeur en virgule fixe présente un premier facteur d'échelle ;

des instructions pour recevoir une deuxième valeur en virgule fixe représentant un deuxième entier naturel, dans lequel la deuxième valeur en virgule fixe présente un deuxième facteur d'échelle ;

des instructions pour recevoir une troisième valeur en virgule fixe représentant un troisième entier naturel, dans lequel la troisième valeur en virgule fixe présente un troisième facteur d'échelle ; et

des instructions pour déterminer si la troisième valeur en virgule fixe est un résultat correctement tronqué de la division de la première valeur en virgule fixe par la deuxième valeur en virgule fixe :

par détermination si la différence entre (e) le produit de la première valeur en virgule fixe et de l'inverse d'un facteur d'échelle combiné et (f) le produit de la deuxième valeur en virgule fixe et de la troisième valeur en virgule fixe se situe dans une plage délimitée par la négation de la deuxième valeur en virgule fixe et la deuxième valeur en virgule fixe, dans lequel le facteur d'échelle combiné est égal au produit du deuxième facteur d'échelle et du troisième facteur d'échelle, divisé par le premier facteur d'échelle.

15. Dispositif de vérification d'un calcul, ledit dispositif comprenant :

une mémoire : et

un processeur en communication avec la mémoire, ledit processeur étant configuré

pour recevoir une première valeur en virgule fixe représentant un premier entier naturel, dans lequel la première valeur en virgule fixe représente un premier facteur d'échelle ;

pour recevoir une deuxième valeur en virgule fixe représentant un deuxième entier naturel, dans lequel la deuxième valeur en virgule fixe présente un deuxième facteur d'échelle ;

pour recevoir une troisième valeur en virgule fixe représentant un troisième entier naturel, dans lequel la troisième valeur en virgule fixe présente un troisième facteur d'échelle ; et

pour déterminer si la troisième valeur en virgule fixe est un résultat correctement tronqué de la division de la première valeur en virgule fixe par la deuxième valeur en virgule fixe :

par détermination si la différence entre (e) le produit de la première valeur en virgule fixe et de l'inverse d'un facteur d'échelle combiné et (f) le produit de la deuxième valeur en virgule fixe et de la troisième valeur en virgule fixe se situe dans une plage délimitée par la négation de la deuxième valeur en virgule fixe et la deuxième valeur en virgule fixe, dans lequel le facteur d'échelle combiné est égal au produit du deuxième facteur d'échelle et du troisième facteur d'échelle, divisé par le premier facteur d'échelle.

16. Procédé de vérification d'un calcul, dans lequel un démonstrateur a mis en œuvre un procédé comprenant

la réception d'une première valeur en virgule fixe représentant un premier entier naturel, dans lequel la première valeur en virgule fixe présente un premier facteur de mise à l'échelle ;

la réception d'une deuxième valeur en virgule fixe représentant un deuxième entier naturel, dans lequel la deuxième valeur en virgule fixe présente un deuxième facteur d'échelle ;

La réception d'une troisième valeur en virgule fixe représentant un troisième entier naturel, dans lequel la troisième valeur en virgule fixe présente un troisième facteur d'échelle ; et

la détermination si la troisième valeur en virgule fixe est un résultat correctement tronqué de la division de la première valeur en virgule fixe par la deuxième valeur en virgule fixe :

par détermination si la différence entre (e) le produit de la première valeur en virgule fixe et de l'inverse d'un facteur d'échelle combiné et (f) le produit de la deuxième valeur en virgule fixe et de la troisième valeur en virgule fixe se situe dans une plage délimitée par la négation de la deuxième valeur en virgule fixe et la deuxième valeur en virgule fixe, dans lequel le facteur d'échelle combiné est égal au produit du deuxième facteur d'échelle et du troisième facteur d'échelle, divisé par le premier facteur d'échelle, ledit procédé comprenant :

la réception du démonstrateur des engagements desdites première, deuxième et troisième valeurs en virgule fixe multiplicande ;
la réception du démonstrateur d'une preuve cryptographique que la différence entre (e) le produit de la première valeur en virgule fixe et de l'inverse d'un facteur d'échelle combiné et (f) le produit de la deuxième valeur en virgule fixe et de la troisième valeur en virgule fixe se situe dans la plage délimitée par la négation de la deuxième valeur en virgule fixe et la deuxième valeur en virgule fixe ; et
la vérification de la preuve cryptographique par rapport aux engagements respectifs.

EP 3 566 423 B1

FIG. 1

200

Receive a first fixed-point value
Receive a second fixed-point value
Receive a third fixed-point value

202

Determine whether the difference between (a) the product of the third fixed-point value and the inverse of the combined scaling factor and (b) the product of the first fixed-point value and the second fixed-point value is within a range bounded by the negation of the inverse of the combined scaling factor and the inverse of the combined scaling factor

204

# FIG. 2

300

Determine whether the sum of (c) the inverse of the combined scaling factor and (d) the difference between (a) the product of the third fixed-point value and the inverse of the combined scaling facor and (b) the product of the first fixed-point value and the second fixed-point value is greater than or equal to zero

302

Determine whether the difference between (c) the inverse of the combined scaling factor and (d) the difference between (a) the product of the third fixed-point value and the inverse of the combined scaling factor and (b) the product of the fixed-point value and the second fixed-point value is greater than or equal to zero

304

# FIG. 3

400

Form the sum of (c) the inverse of the combined scaling factor
and (d) the difference between (a) the product of the third fixed-point
value and the inverse of the combined scaling factor and (b) the
product of the first fixed-point value and the second fixed-point value
— 402

Compute a bit decomposition — 404

Determine whether each bit of the bit decomposition is a binary value — 406

# FIG. 4

500

Form the difference between (c) the inverse of the combined scaling
factor and (d) the difference between (a) the product of the third
fixed-point value and the inverse of the combined scaling factor and (b)
the product of the first fixed-point value and the second fixed-point value
— 502

Compute a bit decomposition — 504

Determine whether each bit of the bit decomposition is a binary value — 506

# FIG. 5

600

| |
|---|
| Receive a first fixed-point value<br>Receive a second fixed-point value<br>Receive a third fixed-point value |

602

| |
|---|
| Determine whether the difference between (e) the product of the first fixed-point value and the inverse of the combined scaling factor and (f) the product of the second fixed-point value and the third fixed-point value is within a range bounded by the negation of the second fixed-point value and the second fixed-point value |

604

## FIG. 6

700

| |
|---|
| Determine whether the sum of the second fixed-point value and the difference between (e) the product of the first fixed-point value and the inverse of the combined scaling factor and (f) the product of the second fixed-point value and the third fixed-point value is greater than or equal to zero |

702

| |
|---|
| Determine whether the sum of the second fixed-point value and the difference between (f) the product of the second fixed-point value and the third fixed-point value and (e) the product of the first fixed-point value and the inverse of the combined scaling factor is greater than or equal to zero |

704

## FIG. 7

800

Form the sum of the second fixed-point value and the difference between (e) the product of the first fixed-point value and the inverse of the combined scaling factor and (f) the product of the second fixed-point value and the third fixed-point value 802

Compute a bit decomposition 804

Determine whether each bit of the bit decomposition is a binary value 806

FIG. 8

900

Form the sum of the second fixed-point value and the difference between (f) the product of the second fixed-point value and the third fixed-point value and (e) the product of the first fixed-point value and the inverse of the combined scaling factor 902

Compute a bit decomposition 904

Determine whether each bit of the bit decomposition is a binary value 906

FIG. 9

## REFERENCES CITED IN THE DESCRIPTION

### Patent documents cited in the description

- US 62443080

- US 62489688

### Non-patent literature cited in the description

- **E. FUJISAKI ; T. OKAMOTO.** Statistical zero knowledge protocols to prove modular polynomial relations. *Advances in Cryptology - CRYPTO '97, 17th Annual International Cryptology Conference,* 17 August 1997, 16-30

- **B. PARNO ; J. HOWELL ; C. GENTRY ; M. RAYKOVA.** Pinocchio: Nearly Practical Verifiable Computation. *Proceedings of S&P,* 2013

- **S. DE HOOGH.** Design of large scale applications of secure multiparty computation: secure linear programming. *PhD thesis, Eindhoven University of Technology,* 2012

- **S. DE HOOGH ; B. SCHOENMAKERS ; M. VEENINGEN.** Certificate validation in secure computation and its use in verifiable linear programming. *Progress in Cryptology - AFRICACRYPT 2016 - 8th International Conference on Cryptology in Africa,* 13 April 2016, 265-284

- **B. SCHOENMAKERS ; M. VEENINGEN ; N. DE VREEDE.** Trinocchio: Privacy-friendly outsourcing by distributed verifiable computation. *IACR Cryptology ePrint Archive,* 2015, vol. 480

- **S. DE HOOGH ; B. SCHOENMAKERS ; M. VEENINGEN.** Certificate validation in secure computation and its use in verifiable linear programming. *Progress in Cryptology - AFRICACRYPT 2016 - 8th International Conference on Cryptology in Africa,* 2016, 265-284

- **R. THORBEK.** Linear Integer Secret Sharing. *PhD thesis, University of Aarhus,* 2009